# EUROPÄISCHE PATENTSCHRIFT

(11) **EP 2 163 432 B1**
(45) Veröffentlichungstag und Bekanntmachung des Hinweises auf die Patenterteilung: **02.11.2011**
(21) Anmeldenummer: 09010889.5
(22) Anmeldetag: 26.08.2009
(51) Int. Cl.: B60R 9/06

(54) **Hecklastträgerkupplung und Hecklastträger**
Load carrier for a towing hook and load carrier
Porte charge pour liaison à routule et porte charge

(30) Priorität: 12.09.2008 DE 102008047110
(43) Veröffentlichungstag der Anmeldung: 17.03.2010
(73) Patentinhaber: WESTFALIA - Automotive GmbH, 33378 Rheda-Wiedenbrück (DE)
(72) Erfinder: Aufderheide, Reinhold, 33397 Rietberg (DE); Hermbusch, Gerhard, 34449 Langenberg (DE); Peitz, Jürgen, 33378 Rheda-Wiedenbrück (DE)
(74) Vertreter: Bregenzer, Michael

(56) Entgegenhaltungen:
- EP-A- 1 170 178
- WO-A-2006/033573
- DE-A1- 10 155 232
- DE-U1-202006 012 073
- FR-A- 2 905 632

## Beschreibung

Die Erfindung betrifft eine Hecklastträgerkupplung zur lösbaren Festlegung eines Hecklastträgers an einer Kupplungskugel einer Kraftfahrzeug-Anhängekupplung, mit einer Klemmeinrichtung, die zwei Klemmteile und wenigstens ein Koppelglied umfasst, wobei die Klemmteile zwischen einer zum Aufsetzen des Hecklastträgers auf die Kupplungskugel vorgesehenen Öffnungsstellung und einer zur Festlegung des Hecklastträgers an der Kupplungskugel vorgesehen Klemmstellung schwenkbeweglich relativ zueinander bewegbar und in der Klemmstellung einander gegenüberliegend angeordnet sind und einen Klemmbereich zur Aufnahme der Kupplungskugel begrenzen und wobei das Koppelglied die Klemmteile miteinander verbindet und jeweils schwenkbeweglich an den Klemmteilen angelenkt ist und wenigstens einem der Klemmteile eine Führungseinrichtung zur Vorgabe einer relativen Stellung der Klemmteile zwischen der Öffnungsstellung und der Klemmstellung zugeordnet ist und die Führungseinrichtung wenigstens eine Kulissenbahn zur Positionierung der Klemmteile zueinander in Abhängigkeit von einem Schwenkwinkel des Koppelglieds gegenüber dem zweiten Klemmteil umfasst, sowie einen Hecklastträger.

Bei Hecklastträgern handelt es sich üblicherweise um Einrichtungen, die zum Transport von sperrigen Gegenständen, beispielsweise zum Transport von Fahrrädern, vorgesehen sind und die ausgehend von der Kraftfahrzeug-Anhängekupplung entgegen der Hauptfahrtrichtung des Kraftfahrzeugs nach hinten abragen. Das Eigengewicht eines Hecklastträgers kann deutlich mehr als 10 kg betragen und muss während der Montage an die Anhängekupplung vom Benutzer oder einem Helfer gehalten werden. Somit ist es vorteilhaft, wenn die Funktionsweise der Hecklastträgerkupplung für den Benutzer exakt vorhersehbar ist und die An- und Abkopplung an die Kraftfahrzeug-Anhängeeinrichtung möglichst im Einhandbetrieb durchgeführt werden kann. In diesem Fall kann die andere Hand des Benutzers zur Abstützung des Hecklastträgers eingesetzt werden. Durch die Führungsvorrichtung nehmen die Klemmteile zwischen der Öffnungsstellung und der Klemmstellung für den Benutzer gut vorhersehbare Relativstellungen ein, ohne dass hierfür ein Zutun des Benutzers erforderlich ist, wodurch eine komfortable Bedienung gewährleistet wird.

Die Führungseinrichtung umfasst wenigstens eine Kulissenbahn zur Positionierung der Klemmteile zueinander in Abhängigkeit von einem schwenkwinkel des Koppelteils gegenüber dem zweiten Klemmteil. Mit Hilfe der Kulissenbahn kann in einfacher Weise die relative Position der beiden Klemmteile in Abhängigkeit vom Schwenkwinkel des Koppelteils festgelegt werden.

Aus der FR 2 688 178 ist eine Hecklastträgerkupplung bekannt, bei der zwei Klemmteile mit parallel zueinander angeordneten Koppelgliedern verbunden sind. Die Koppelglieder sind jeweils schwenkbeweglich an den Klemmteilen angelenkt, die ihrerseits jeweils Ausnehmungen aufweisen, die an die Außenkontur der Kupplungskugel der Kraftfahrzeug-Anhängevorrichtung angepasst sind. Dabei sind die Klemmteile und die zugehörigen Koppelglieder derart aufeinander abgestimmt, dass die bekannte Hecklastträgerkupplung in einer Öffnungsstellung auf die Kupplungskugel aufgesetzt werden kann. Durch Verschwenken der Klemmteile relativ zueinander kann eine Klemmstellung eingenommen werden, in der die Hecklastträgerkupplung an der Kupplungskugel festgelegt ist. An einem der Klemmteile ist ein Betätigungshebel angebracht, der in der Klemmstellung der Klemmteile an einem beabstandet angeordneten Profil des Hecklastträgers festgelegt werden kann, Mittels des Betätigungshebels kann die Klemmwirkung der Hecklastträgerkupplung ohne zutun eines Bedieners dauerhaft aufrechterhalten werden.

Die DE 101 55 232 A1 offenbart eine Kupplungsvorrichtung zur Anbringung eines mit der Vorrichtung verbundenen Lastenträgers an einer an einem Fahrzeug angebauten Anhängerkupplung, wobei die Anhängerkupplung zumindest einen ersten und einen zweiten Kupplungsbereich aufweist, an dem sowohl ein erstes, fest montiertes und mit einem dem ersten Kupplungsbereich entsprechenden dritten Kupplungsbereich versehenes Kupplungsorgan angebracht ist als auch ein zweites, beweglich angeordnetes und mit einem dem zweiten Kupplungsbereich entsprechenden vierten Kupplungsbereich versehenes Kupplungsorgan. Das bewegliche Kupplungsorgan kann über ein Spannorgan in Richtung zum festen Kupplungsorgan gespannt werden, so dass eine feste Verbindung zwischen der Anhängerkupplung und der Kupplungsvorrichtung erhalten wird. Hierbei ist das Spannorgan über eine Lasche mit dem beweglichen Kupplungsorgan verbunden, wodurch letzteres mit Hilfe des Spannorgans in eine Lösestellung oder eine Spannstellung gebracht werden kann.

Die Aufgabe der Erfindung besteht darin, eine Hecklastträgerkupplung sowie einen Hecklastträger bereitzustellen, die ei nen kompakten Aufbau und eine sichere Bedienung gewährleisten.

Für die Hecklastträgerkupplung der eingangs genannten Art wird die Aufgabe der Erfindung dadurch gelöst, dass die Führungseinrichtung für eine Freigabe der Klemmteile in der Klemmstellung ausgebildet ist.

Ohne Einwirkung der Führungseinrichtung lassen die beiden Schwenkachsen des Koppelglieds eine zumindest im Wesentlichen freie Einstellbarkeit des von den Klemmteilen eingeschlossenen Winkels zu. Um die Bedienung der Hecklastträgerkupplung zu erleichtern, wird diese freie Winkeleinstellbarkeit durch die Führungseinrichtung zumindest bereichsweise zwischen der Öffnungsstellung und der Klemmstellung eingeschränkt. Die prinzipielle Aufgabe der Führungseinrichtung besteht also darin, jeder Stellung des Koppelglieds bezogen auf eines der Klemmteile eine eindeutige Stellung des jeweils anderen Klemmteiles zuzuordnen. In der Klemmstellung ist hingegen eine freie Einstellbarkeit des von den Klemmteilen eingeschlossenen Winkels vorteilhaft. Dadurch können sich die Klemmteile in günstiger Weise gegenüber der zu klemmenden Kupplungskugel ausrichten und liegen möglichst mit ihrer gesamten Anlagefläche an der Kupplungskugel an. Durch das Bewegungsspiel der Klemmteile, insbesondere in der Klemmstellung, wird eine statische Überbestimmung für die Hecklastträgerkupplung vermieden, die zu einem ungünstigen Klemmverhalten führen könnte. Die Ausrichtung der Klemmteile gegenüber der Kupplungskugel in der Klemmstellung soll sich unabhängig von der Führungseinrichtung einstellen können. Vorzugsweise wird die Ausrichtung der Klemmteile ausschließlich durch die Geometrie der Kupplungskugel und der zugeordneten Kupplungskugelaufnahmen in den Klemmteilen sowie durch die Kraftrichtung der Klemm kraft zwischen den Klemmteilen in der Klemmstellung bestimmt. Zusätzliche Einflüsse auf die Ausrichtung der Klemmteile zueinander sollten zur Vermeidung von Verspannungen unterbleiben. Dies wird durch die erfindungsgemäße Führungseinrichtung in der Klemmstellung erreicht.

Vorzugsweise ergibt sich die relative Stellung der Klemmteile bereits ausschließlich aus dem Schwenkwinkel des Koppelglieds, so dass zumindest bereichsweise von einer Zwangssteuerung der Klemmteile durch die Führungseinrichtung gesprochen werden kann.

Je nach Ausgestaltung der Kulissenbahn kann dadurch eine bereichsweise oder vollständige Zwangsführung der Klemmteile zueinander oder eine wenigstens bereichsweise Vorgabe eines Raumbereichs, in dem das jeweilige Klemmteil in Abhängigkeit vom Schwenkwinkel des Koppelteils zu liegen kommt, in der Art einer spielbehafteten Zwangsführung, erfolgen.

Bei einer Anbringung der Hecklastträgerkupplung mit quer zur Fahrrichtung an der Kupplungskugel anliegenden Klemmteilen ist die erfindungsgemäße Anordnung der Schwenkachsen vorteilhaft. Der Benutzer kann die Hecklastträgerkupplung von der Seite des Kraftfahrzeugs her bedienen und muss sich nicht über den Hecklastträger, der mit verschiedenen Aufbauten, insbesondere zur Festlegung von Fahrrädern, versehen sein kann, bis zur Hecklastträgerkupplung hinüber beugen. Außerdem kann dadurch in einfacher Weise eine Abdeckung der Schwenkachsen durch ein geeignetes Schutzgehäuse erreicht werden, ohne dass dem Benutzer beim Auf- bzw. Absetzen des Hecklastträgers auf die Kraftfahrzeug-Anhängevorrichtung die Sicht auf die Klemmteile genommen wird.

Ein solches Schutzgehäuse zum Schutz der Gelenkverbindungen der Schwenkachsen ist vorzugsweise nicht in den Kraftfluss zwischen den Klemmteilen eingebunden und kann daher leicht und kostengünstig hergestellt werden. Bevorzug ist das Schutzgehäuse als separates Bauteil, insbesondere als Kunststoffspritzgussteil, ausgebildet und wird beispielsweise mittels Rasthaken an der Hecklastträgerkupplung angebracht.

Bei einer alternativen Variante des Hecklastträgers, bei der das erste Klemmteil in Fahrtrichtung des Kraftfahrzeugs betrachtet vor der Kupplungskugel der Kraftfahrzeug-Anhängevorrichtung angeordnet wird, wirkt sich die erfindungsgemäße Anordnung der Schwenkachsen besonders vorteilhaft aus. Bei einer derartigen Anordnung steht üblicherweise nur ein geringer Abstand zwischen der Kupplungskugel und einer das Kraftfahrzeug nach hinten begrenzenden Heckschürze zur Verfügung. Bei einer derartigen Einbausituation sind die erste und die zweite Schwenkachse der erfindungsgemäßen Hecklastträgerkupplung hinter dem in Fahrtrichtung hinter der Kupplungskugel angeordneten zweiten Klemmteil und somit in einem vom Kraftfahrzeug nach hinten abragenden Bereich angeordnet, in dem mehr Bauraum zur Verfügung steht.

Vorteilhaft ist es, wenn die Klemmteile zusammen mit dem wenigstens einen Koppelglied eine Totpunkthebelanordnung bilden. Bei einer Totpunkthebelanordnung können die Klemmteile aus einer Öffnungsstellung, bei der sie einen größeren Abstand zueinander einnehmen, mittels einer Relativbewegung, insbesondere mittels einer kombinierten Schiebe-Schwenkbewegung, zueinander in eine Totpunktstellung gebracht werden, in der sie zumindest nahezu einen minimalen Abstand einnehmen. In der Totpunktstellung befinden sich die Klemmteile jedoch nicht in einem stabilen Zustand, da ein Bestreben vorliegt, die gespeicherte Klemmenergie wieder abzubauen. Um eine stabile Stellung der Klemmteile zueinander zu bewirken, wird eine der Schwenkachsen um einen geringen Betrag auf ihrer Schwenkbahn in derjenigen Richtung über den Totpunkt hinaus weiterbewegt, in der sie von der Öffnungsstellung in die Klemmstellung gebracht wurde. Bei der Fortführung dieser Bewegung läuft das entsprechende Klemmteil auf einen Anschlag auf, der eine weitere Relativbewegung der Klemmteile verhindert. Dadurch wird erreicht, dass die Klemmteile anstelle eines labilen Zustands mit minimalem Abstand und maximaler Klemmkraft einen stabilen Zustand mit geringfügig vergrößertem Abstand der Klemmteile und geringfügig verringerter Klemmkraft einnehmen. Bei der erfindungsgemäßen Hecklastträgerkupplung ist somit bei Anlage des zweiten Klemmteils an der Kupplungskugel ein Abstand zwischen der ersten Schwenkachse und einem Mittelpunkt der Kupplungskugel in der Klemmstellung zumindest geringfügig kleiner als der maximale Abstand zwischen der ersten Schwenkachse und dem Mittelpunkt der Kupplungskugel bei Durchschreiten des Scheitelpunkts oder Totpunkts der Schwenkkurve für die jeweilige Schwenkachse.

In Ausgestaltung der Erfindung ist vorgesehen, dass die erste und die zweite Schwenkachse parallel zueinander ausgerichtet sind. Dadurch finden Rotationsbewegungen der Klemmteile nur in einer einzigen Bewegungsebene statt, womit ein einfacher Aufbau der Hecklastträgerkupplung, insbesondere der Totpunkthebelanordnung, gewährleistet wird. Die Bewegungsebene ist orthogonal zu den Schwenkachsen ausgerichtet, die ihrerseits parallel zu einer Klemmebene ausgerichtet sein können. Die Klemmebene ist orthogonal zu den in der Klemmstellung zwischen den Klemmteilen wirkenden Klemmkräften ausgerichtet. Durch eine solche Beziehung zwischen der Ausrichtung der Schwenkachsen und der Ausrichtung der Klemmkräfte werden unerwünschte Reibungsverluste beim Anbringen und Lösen der Hecklastträgerkupplung minimiert. Dies ermöglicht einen vorteilhaften Wirkungsgrad zwischen einer von einem Bediener auf die Hecklastträgerkupplung ausgeübten Bedienkraft und einer von der Hecklastträgerkupplung auf die Kupplungskugel ausgeübten Klemmkraft.

Bei einer Ausgestaltung der Erfindung ist vorgesehen, dass das erste Klemmteil wenigstens einen Zugarm aufweist, der mittels der ersten Schwenkachse mit dem Koppelglied schwenkbeweglich verbunden ist und der sich entlang des Klemmbereichs bis über die dem Klemmbereich entgegengesetzte Seite des zweiten Klemmteils erstreckt. Der Klemmbereich ist derjenige Raumabschnitt zwischen den sich gegenüberliegenden Klemmteilen, der von den Anlageflächen der Klemmteile an der Kupplungskugel begrenzt wird. Dem Zugarm des ersten Klemmteils kommt die Aufgabe zu, eine Verbindung zwischen der abseits des Klemmbereichs gelegenen ersten Schwenkachse und der zur Anlage an der Kupplungskugel vorgesehenen Anlagefläche des ersten Klemmteils zu gewährleisten. Zu diesem Zweck erstreckt sich der Zugarm entlang des Klemmbereichs, vorzugsweise zumindest nahezu parallel zur Klemmkraftrichtung, die sich in der Klemmstellung zwischen den Klemmteilen einstellt, und bis über die dem Klemmbereich entgegengesetzte oder abgewandte Seite des zweiten Klemmteils hinaus. Dadurch wird die erfindungsgemäße gemeinsame Anordnung der beiden Schwenkachsen auf der dem Klemmbereich entgegengesetzten Seite des zweiten Klemmteils ermöglicht.

Vorteilhaft ist es, wenn das erste Klemmteil zwei Zugarme sowie einen zwischen den Zugarmen angeordneten Klemmkörper umfasst, die eine im Wesentlichen U-förmige Anordnung bilden. Dabei ist der Klemmkörper zur zumindest bereichsweisen Anlage an der Kupplungskugel vorgesehen, während die Zugarme für eine Zugkraftübertragung zwischen dem Klemmkörper und der ersten Schwenkachse dienen. Durch diese Gestaltung des Klemmteils wird eine symmetrische Kraftübertragung zwischen dem Klemmkörper und dem Koppelglied gewährleistet. Vorteilhaft ist es, wenn das erste Klemmteil einstückig ausgebildet oder als Schweißkonstruktion aus mehreren Teilen zusammengesetzt ist, da dadurch eine besonders kompakte und dauerfeste Gestaltung des Klemmteils ermöglicht wird.

In weiterer Ausgestaltung der Erfindung ist vorgesehen, dass das erste und/oder das zweite Klemmteil jeweils wenigstens eine Kupplungskugelaufnahme, vorzugsweise eine Ausnehmung, insbesondere eine Durchgangsbohrung, aufweisen, die zur bereichsweisen Anlage an der Kupplungskugel in der Klemmstellung ausgebildet ist. Vorzugsweise ist die Kupplungskugelaufnahme derart ausgebildet, dass das erste und/oder das zweite Klemmteil in der Klemmstellung mit einer vorzugsweise kugelkalottenabschnittsförmig ausgebildeten Anlagefläche an der Kupplungskugel anliegen. Vorzugsweise sind Anlageflächen für das erste und das zweite Klemmteil spiegelsymmetrisch zu einer durch den Kugelmittelpunkt der Kupplungskugel verlaufenden Spiegelebene ausgebildet. Besonders bevorzugt beträgt ein minimaler Durchmesser der Anlagefläche wenigstens 50% des maximalen Kupplungskugeldurchmessers. Insbesondere beträgt ein maximaler Durchmesser der Anlagefläche nicht mehr als 90% des maximalen Kupplungskugeldurchmessers. Bei einer Ausführung der Kupplungskugelaufnahme als Durchgangsbohrung weisen die jeweiligen Klemmkörper des ersten und/oder des zweiten Klemmteils vorzugsweise eine im Wesentlichen ringförmige Gestalt auf. Durch die geschlossene Ringstruktur können die bei Anlage an der Kupplungskugel durch die Klemmkräfte hervorgerufenen zirkularen Spannungen im jeweiligen Klemmkörper unterbrechungsfrei aufgenommen werden. Dies ermöglicht eine schlanke Gestaltung des Klemmkörpers des jeweiligen Klemmteils. Besonders bevorzugt ist ein Übergang zwischen der Durchgangsbohrung und einer der Kupplungskugel in der Klemmstellung zugewandten Klemmteiloberfläche des Klemmteils mit einer Fase versehen. Dadurch wird eine Vergrößerung der Anlagefläche und eine Verringerung der Flächenpressung zwischen Klemmkörper und Kupplungskugel erreicht.

Vorzugsweise ist die Kulissenbahn an dem Zugarm des ersten Klemmteils ausgebildet und das zweite Klemmteil weist wenigstens eine Führungsfläche auf, an der die Kulissenbahn zumindest bereichsweise anliegt. Dadurch kommt dem Zugarm eine Doppelfunktion zu: neben der Übertragung der Zugkräfte zwischen der ersten Schwenkachse und dem Klemmkörper dient der Zugarm zusätzlich zur Beeinflussung der räumlichen Lage des ersten Klemmteils relativ zum zweiten Klemmteil. Um dies zu gewährleisten, ist erfindungsgemäß vorgesehen, dass das zweite Klemmteil mit einer Führungsfläche versehen ist, an der die Kulissenbahn abgleiten kann, um bei der Durchführung des Schwenkvorgangs die gewünschte, zumindest teilweise Zwangsführung der Klemmteile zueinander zu gewährleisten.

In weiterer Ausgestaltung der Erfindung ist vorgesehen, dass die Führungseinrichtung für eine Zwangsverschwenkung des ersten Klemmteils aus der Klemmstellung, in der sich die Klemmteile gegenüberliegen, in eine Öffnungsstellung, in der die Klemmteile einen spitzen Winkel miteinander einschließen, ausgebildet ist. Durch die von der Führungseinrichtung bestimmte zwangsverschwenkung der Klemmteile zueinander wird erreicht, dass die Klemmteile sowohl in der Öffnungsstellung als auch in der Klemmstellung eine definierte Lage zueinander einnehmen. Dadurch wird gewährleistet, dass das Aufsetzen bzw. Abheben der Hecklastträgerkupplung von der Kupplungskugel in einfacher Weise durchgeführt werden kann. Vorzugsweise liegen sich die Klemmteile in der Klemmstellung derart gegenüber, dass einander zugewandte Oberflächen der Klemmteile im Wesentlichen parallel zueinander ausgerichtet sind. Diese Oberflächen schließen in der Öffnungsstellung einen spitzen Winkel ein, so dass in der Öffnungsstellung zwischen den Klemmteilen ein maximaler Freiraum vorliegt, der die Handhabung des Hecklastträgers beim Aufsetzen auf die Kraftfahrzeug-Anhängekupplung erleichtert.

In weiterer Ausgestaltung der Erfindung ist vorgesehen, dass die Führungseinrichtung für eine Schwenkbewegung des ersten Klemmteils aus der dem zweiten Klemmteil gegenüberliegenden Klemmstellung in eine oberhalb des Klemmbereichs, insbesondere oberhalb des zweiten Klemmteils, angeordnete Öffnungsstellung ausgebildet ist. Dadurch wird eine besonders weite Öffnung für die Hecklastträgerkupplung erzielt, die das Aufsetzen auf die Kupplungskugel erleichtert. Besonders vorteilhaft ist es, wenn das erste Klemmteil in der Öffnungsstellung oberhalb des zweiten Klemmteils zu liegen kommt. Dadurch wird ein großer Freiraum zwischen den Klemmteilen gewährleistet, der eine Aufsetzbewegung der Hecklastträgerkupplung auf die Kraftfahrzeug-Anhängekupplung erheblich vereinfacht.

Vorteilhaft ist es, wenn an dem Koppelglied ein Betätigungshebel zur Einleitung von Bedienkräften eines Benutzers auf die Klemmteile angebracht ist. Über den Betätigungshebel kann vom Bediener ein Drehmoment auf das Koppelglied eingeleitet werden, um entweder die Klemmteile aus der Öffnungsstellung in die Klemmstellung oder in umgekehrter Richtung aus der Klemmstellung in die Öffnungsstellung zu verschwenken. Vorzugsweise ist der Betätigungshebel unmittelbar mit dem Koppelglied verbunden. Denkbar ist es jedoch auch, dass der Betätigungshebel Teil eines Getriebes, insbesondere eines Hebelgetriebes ist, so dass eine entfernt vom Koppelglied stattfindende Krafteinleitung ermöglicht wird.

In weiterer Ausgestaltung der Erfindung ist vorgesehen, dass der Betätigungshebel in der Öffnungsstellung der Klemmteile beim Aufsetzen des Heckträgers auf die Kupplungskugel zumindest nahezu in vertikaler Richtung und/oder in der Klemmstellung bei geklemmter Kupplungskugel zumindest nahezu in horizontaler Richtung ausgerichtet ist. Vorteilhaft ist ein Schwenkbereich für den Betätigungshebel von ungefähr 90°. Ein solcher Schwenkbereich kann vom Benutzer aus einer einzigen Betätigungsposition heraus vollständig abgedeckt werden. Das heißt, dass der Benutzer weder unterschiedliche Angriffspositionen am Betätigungshebel einnehmen muss noch seine Position gegenüber dem Hecklastträger verändern muss, um die Ver- bzw. Entriegelung der Hecklastträgerkupplung herbeizuführen. Besonders bevorzugt überragt der Betätigungshebel in der Klemmstellung den Klemmbereich vorzugsweise in horizontaler Richtung, wodurch die kompakte Gestaltung der Heckträgerkupplung begünstigt wird.

In weiterer Ausgestaltung der Erfindung sind Einstellmittel zur Einstellung einer Beabstandung der Klemmteile in der Klemmstellung vorgesehen. Damit kann ein Ausgleich von Maßabweichungen an der Kupplungskugel und/oder an den Klemmteilen, wie sie bedingt durch Fertigungstoleranzen und/oder durch Verschleißerscheinungen auftreten können, vorgenommen werden. Mit Hilfe der Einstellmittel kann stets eine ausreichende Klemmkraft für die Hecklastträgerkupplung gewährleistet werden.

Vorzugsweise sind die Einstellmittel für die Einstellung eines Abstands zwischen der ersten und der zweiten Schwenkachse in der Klemmstellung eingerichtet. Durch eine Verlagerung der Schwenkachsen zueinander findet eine Verlagerung der Klemmteile statt. Dadurch kann die gewünschte Einstellung der Beabstandung der Klemmteile zur Beeinflussung der Klemmkraft in der Klemmstellung bewirkt werden. Vorzugsweise findet die Einstellung des Abstands zwischen den Schwenkachsen in einer Ebene statt, die zumindest im Wesentlichen einer durch die Schwenkachsen in der Klemmstellung bestimmten Ebene entspricht.

Vorteilhaft ist es, wenn das zweite Klemmteil eine in Richtung des Klemmbereichs abragende, zur Anlage am Kugelhals ausgebildete Halsstütze und/oder eine in Richtung des Klemmbereichs abragende, zur Auflage auf der Oberseite des Kugelkopfs ausgebildete Kugelstütze aufweist, die beim Aufsetzen der Hecklastträgerkupplung auf die Kupplungskugel in Anlage an wenigstens eine Oberfläche der Kupplungskugel oder des Kupplungshalses kommen, um eine Ausrichtung der Hecklastträgerkupplung gegenüber der Kraftfahrzeug-Anhängekupplung zu bewirken. Mit Hilfe der Halsstütze und/oder der Kugelstütze wird eine fehlerhafte Ausrichtung des Hecklastträgers gegenüber der Kraftfahrzeug-Anhängekupplung vermieden, die zu einer unsicheren Ankupplung des Hecklastträgers an der Kraftfahrzeug-Anhängekupplung führen könnte. Angesichts des teilweise nicht unerheblichen Gewichts derartiger Hecklastträger wird mit Hilfe der Halsstütze und/oder der Kugelstütze das korrekte Aufsetzen der Hecklastträgerkupplung auf den Kupplungskugel erleichtert und ein zuverlässiger Kupplungsvorgang für die Hecklastträgerkupplung sichergestellt.

Vorteilhaft ist es, wenn die Kugelstütze und/oder die Halsstütze in der Klemmstellung beabstandet zum Kugelkopf angeordnet sind. Dadurch wird eine statische Überbestimmung für die Hecklastträgerkupplung vermieden. Vielmehr liegen in der Klemmstellung lediglich die beiden Klemmteile mit ihren jeweiligen Anlageflächen an der Kupplungskugel an und können sich in vorteilhafter Weise gegenüber der Kupplungskugel ausrichten.

In Ausgestaltung der Erfindung ist vorgesehen, dass die Halsstütze zwei einander gegenüberliegend gabelförmig angeordnete Führungszungen aufweist, die in einem Abstand angeordnet sind, der geringfügig größer als ein Querschnitt des Kugelhals in einer von den Führungszungen in der Klemmstellung aufgespannten Führungsebene ist. Mit Hilfe der Führungszungen wird ein unerwünschtes Verkippen des Hecklastträgers beim Aufsetzen auf die Kraftfahrzeug-Anhängekupplung vermieden. Um eine statische Überbestimmung für die Hecklastträgerkupplung in der Klemmstellung zu vermeiden, sind die Führungszungen derart voneinander beabstandet, dass sie in der Klemmstellung nicht in Berührung mit dem Kugelhals kommen.

Möglich ist es auch, die Halsstütze derart am Koppelglied anzuordnen oder mit dem Koppelglied, insbesondere bewegungsgekoppelt, zu verbinden, dass sie in der Öffnungsstellung beim Aufsetzen der Hecklastträgerkupplung auf die Kupplungskugel den Kugelhals umfasst und im Zuge der Schließbewegung aus dem Halsbereich der Kraftfahrzeug-Anhängekupplung ausgeschwenkt wird. Dadurch kann ebenfalls eine statische Überbestimmung für die Hecklastträgerkupplung in der Klemmstellung vermieden werden.

Vorteilhaft ist es, wenn zur Kopplung des ersten Klemmteils und des zweiten Klemmteils mittels des Koppelglieds genau zwei Schwenkachsen vorgesehen sind. Dabei ist die erste Schwenkachse zwischen dem ersten Klemmteil und dem Koppelglied ausgebildet, während die zweite Schwenkachse zwischen dem zweiten Klemmteil und dem Koppelglied ausgebildet ist. Durch diese Anordnung wird ein direkter Kraftfluss wischen dem ersten Klemmteil, dem Koppelglied und dem zweiten Klemmteil ermöglicht, der eine besonders kompakte Gestaltung der erfindungsgemäßen Hecklastträgerkupplung begünstigt. Insbesondere kann auf zusätzliche Bauteile, beispielsweise Gehäuseteile, verzichtet werden, die zur Weiterleitung des Kraftflusses stabil ausgeführt werden müssten und somit der Zielsetzung einer kompakten Gestaltung der Hecklastträgerkupplung entgegenstehen würden.

Vorteilhaft ist es, wenn eine Verriegelungseinrichtung zur Verriegelung des Koppelglieds, insbesondere des mit dem Koppelglied verbundenen Betätigungshebels, in der Klemmstellung ausgebildet ist. Durch die Verriegelungseinrichtung wird vermieden, dass die auf die Klemmteile einwirkenden Reaktionskräfte zu einem unerwünschten Öffnen der Hecklastträgerkupplung führen. Besonders vorteilhaft ist es, wenn die Hecklastträgerkupplung als Totpunkthebelanordnung ausgebildet ist, da hierbei in der Klemmstellung die Sicherungswirkung durch das Überschreiten des Totpunkts für das Koppelglied von der zusätzlichen Blockierung des Koppelglieds oder des damit verbundenen Betätigungshebels ergänzt wird. Dies ermöglicht eine besonders sichere Festlegung der Hecklastträgerkupplung an der Kraftfahrzeug-Anhängekupplung.

Vorteilhaft ist es, wenn die Verriegelungseinrichtung einen dem zweiten Klemmteil zugeordneten Riegelausleger aufweist. Der Riegelausleger ermöglicht eine Festlegung des Koppelglieds oder des mit dem Koppelglied verbundenen Betätigungshebels am zweiten Klemmteil. Dadurch wird ein geschlossener Kraftfluss zwischen dem ersten Klemmteil, dem Koppelglied und dem zweitem Klemmteil geschaffen, so dass eine sichere Festlegung der Verriegelungseinrichtung gewährleistet ist.

In weiterer Ausgestaltung der Erfindung ist vorgesehen, dass der Riegelausleger vom zweiten Klemmteil in Richtung des Klemmbereichs abragt und zumindest im Wesentlichen parallel zur Klemmkraftrichtung ausgerichtet ist. Besonders vorteilhaft ist es, wenn die Verriegelungseinrichtung einen, insbesondere dem Betätigungshebel zugeordneten, Schieberiegel aufweist, der in eine Verriegelungsstellung vorgespannt ist. Dadurch lässt sich eine besonders kompakte und einfach aufgebaute Verriegelungseinrichtung verwirklichen, die eine zuverlässige Verriegelung des Koppelglieds oder des Betätigungshebels gewährleistet.

In weiterer Ausgestaltung der Erfindung ist vorgesehen, dass die Klemmeinrichtung für eine im Bereich der Klemmstellung im Wesentlichen horizontale Klemmbewegung der Klemmteile eingerichtet ist. Bei Zugrundelegung einer horizontalen Klemmbewegung können beide Klemmteile in gleicher Weise, insbesondere als geschlossene Strukturen, insbesondere Ringstrukturen, verwirklicht werden, da es nicht erforderlich ist, auf den nach unten von der Kupplungskugel abstehenden Kugelhals Rücksicht zu nehmen. Dadurch wird eine besonders kompakte und stabile Gestaltung der Klemmeinrichtung ermöglicht. Im Bereich der Klemmstellung erfolgt die Klemmbewegung bedingt durch die Stellung des Koppelglieds und der Schwenkachsen mit einem bezogen auf die Schwenkbewegung des Koppelglieds minimalen translatorischen Weg und dadurch mit maximaler Kraftverstärkung für die vom Benutzer in den Betätigungshebel eingeleitete Schwenkbewegung.

In weiterer Ausgestaltung ist vorgesehen, dass das zweite Klemmteil für eine Festlegung an einem Hecklastträger ausgebildet ist. Das zweite Klemmteil ist vorzugsweise mit der Halsstütze und/oder der Kugelstütze ausgerüstet und eignet sich daher besonders für eine vorläufige Festlegung an der Kupplungskugel. Durch die Anbringung des Hecklastträgers am zweiten Klemmteil profitiert dieser von der Ausrichtfunktion durch das zweite Klemmteil.

Gemäß einem weiteren Aspekt der Erfindung ist ein Hecklastträger zur Anbringung an einer Kraftfahrzeug-Anhängekupplung vorgesehen, der mit einer erfindungsgemäßen Hecklastträgerkupplung versehen ist.

Ein vorteilhaftes Ausführungsbeispiel der Erfindung wird in der Zeichnung dargestellt. Dabei zeigt:
- Figur 1: eine perspektivische Ansicht von schräg oben auf eine Hecklastträgerkupplung in einer Klemmstellung,
- Figur 2: eine Ansicht von schräg unten auf die Hecklastträ- gerkupplung gemäß Figur 1,
- Figur 3: die Hecklastträgerkupplung gemäß den Figuren 1 und 2 in der Klemmstellung auf einer Kraftfahrzeug- Anhängekupplung,
- Figur 4: die Hecklastträgerkupplung gemäß Figur 3 in einer Schnittdarstellung längs einer in Figur 1 darge- stellten Schnittebene A,
- Figur 5: eine Darstellung der Hecklastträgerkupplung in ei- ner ersten, teilweise geöffneten Stellung,
- Figur 6: eine geschnittene Darstellung der Hecklastträger- kupplung in der ersten, teilweise geöffneten Stel- lung,
- Figur 7: die Hecklastträgerkupplung in einer zweiten, teil- weise geöffneten Stellung,
- Figur 8: eine geschnittene Darstellung der Hecklastträger- kupplung in der zweiten, teilweise geöffneten Stel- lung,
- Figur 9: die Hecklastträgerkupplung in einer dritten, teil- weise geöffneten Stellung,
- Figur 10: eine geschnittene Darstellung der Hecklastträger- kupplung in der dritten, teilweise geöffneten Stel- lung,
- Figur 11: die Hecklastträgerkupplung in einer vollständig ge- öffneten Stellung,
- Figur 12: eine geschnittene Darstellung der Hecklastträger- kupplung in der vollständig geöffneten Stellung.

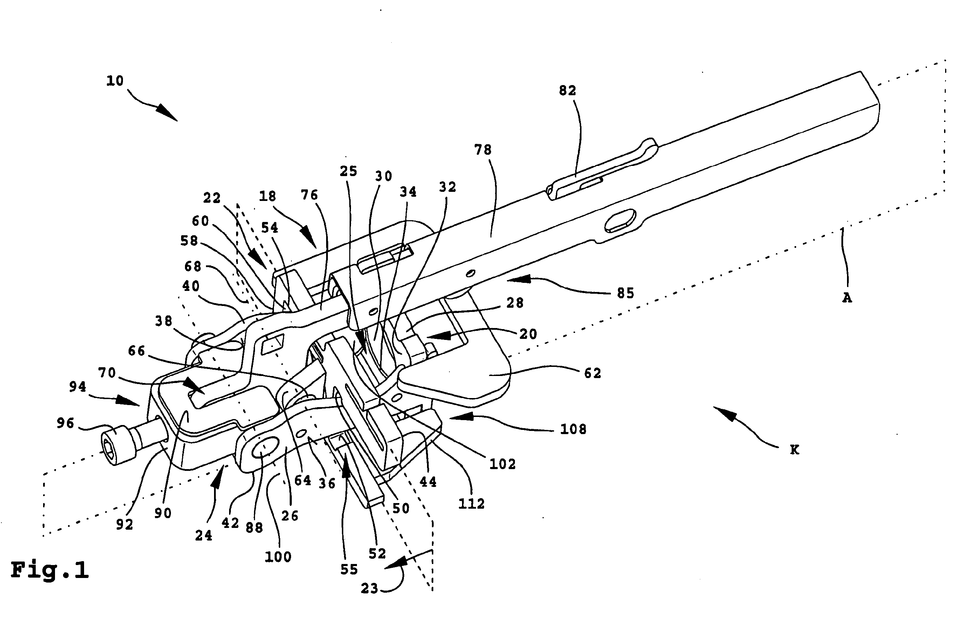

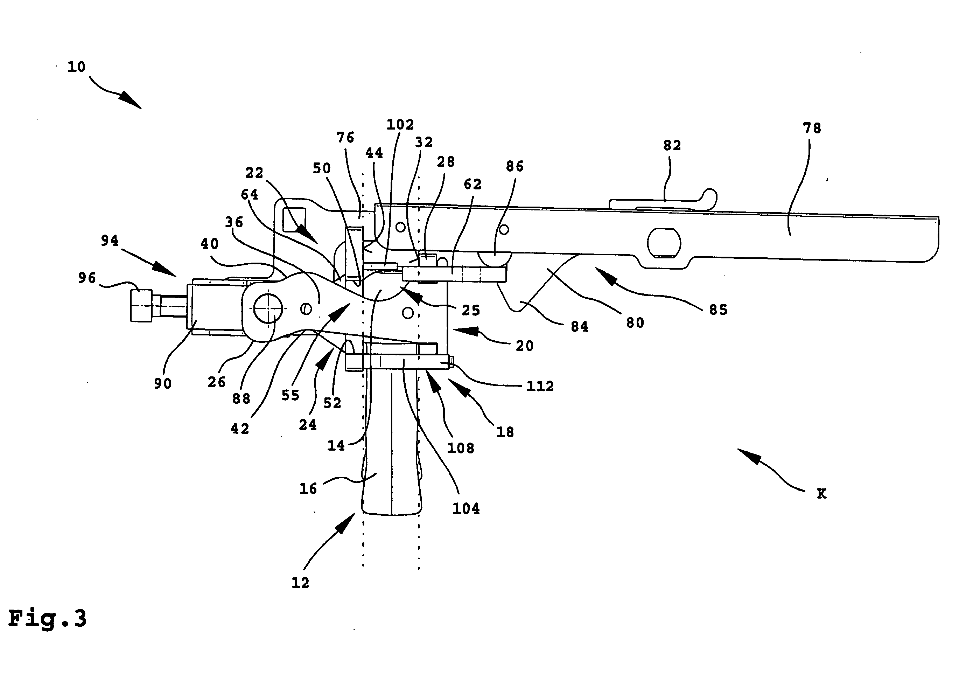

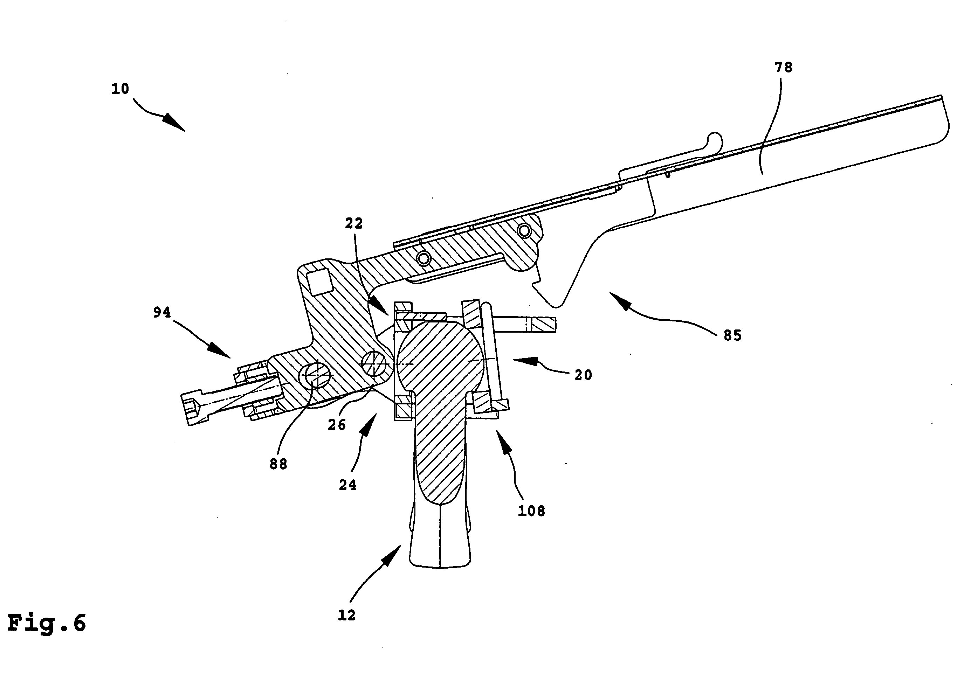

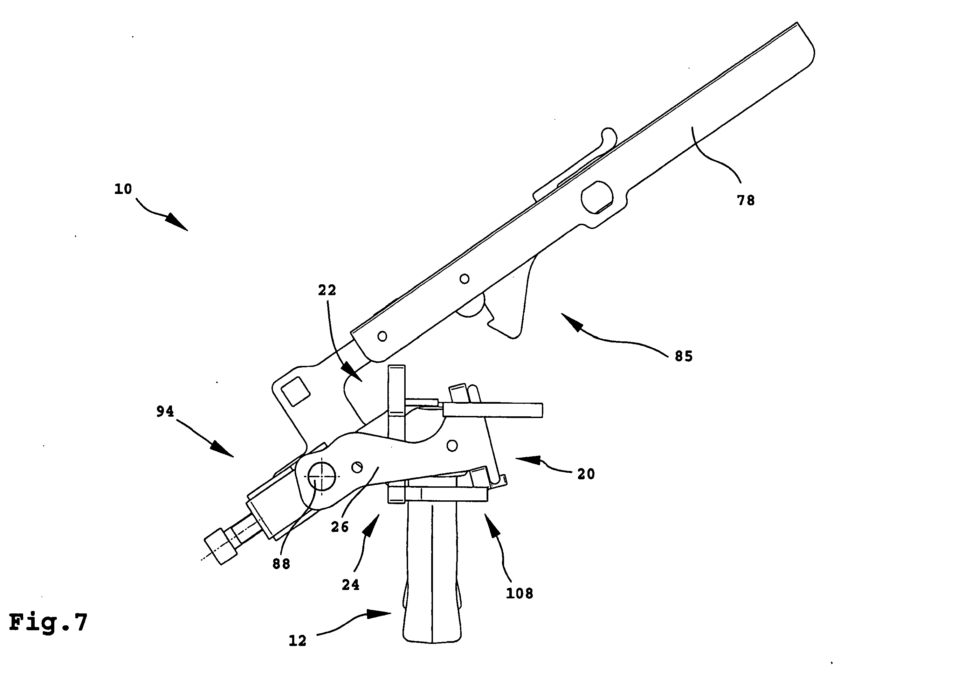

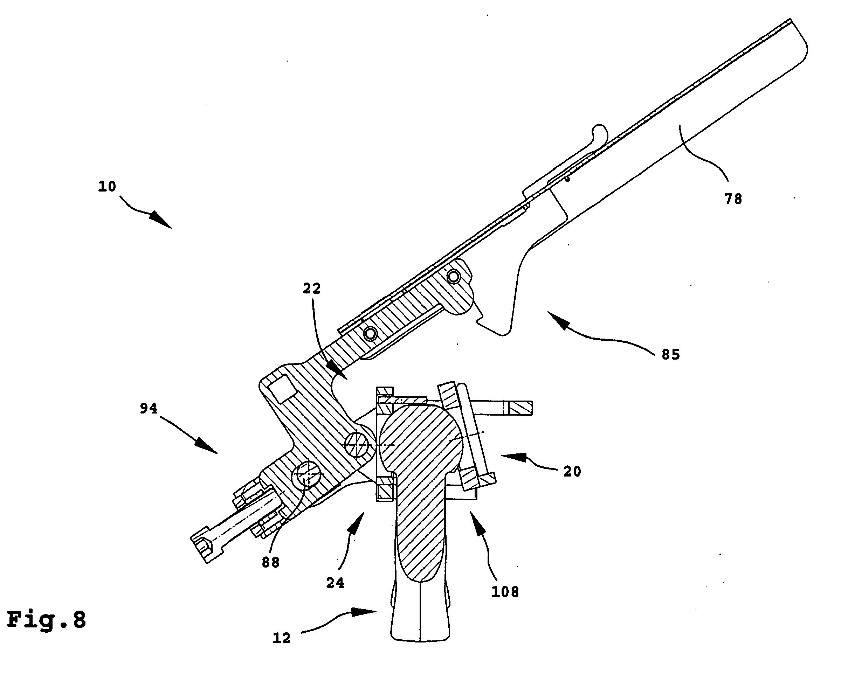

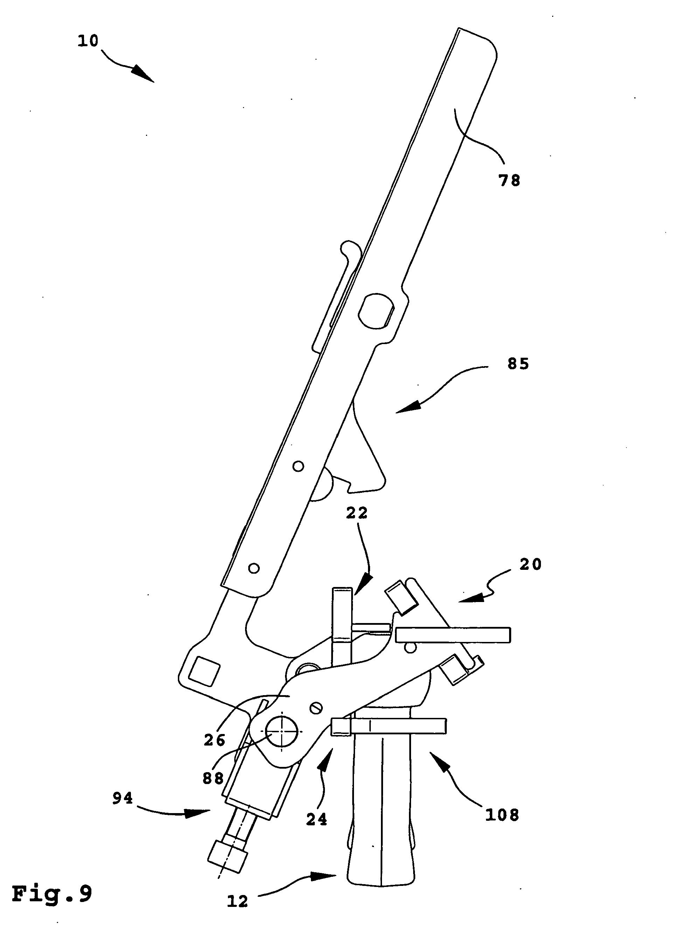

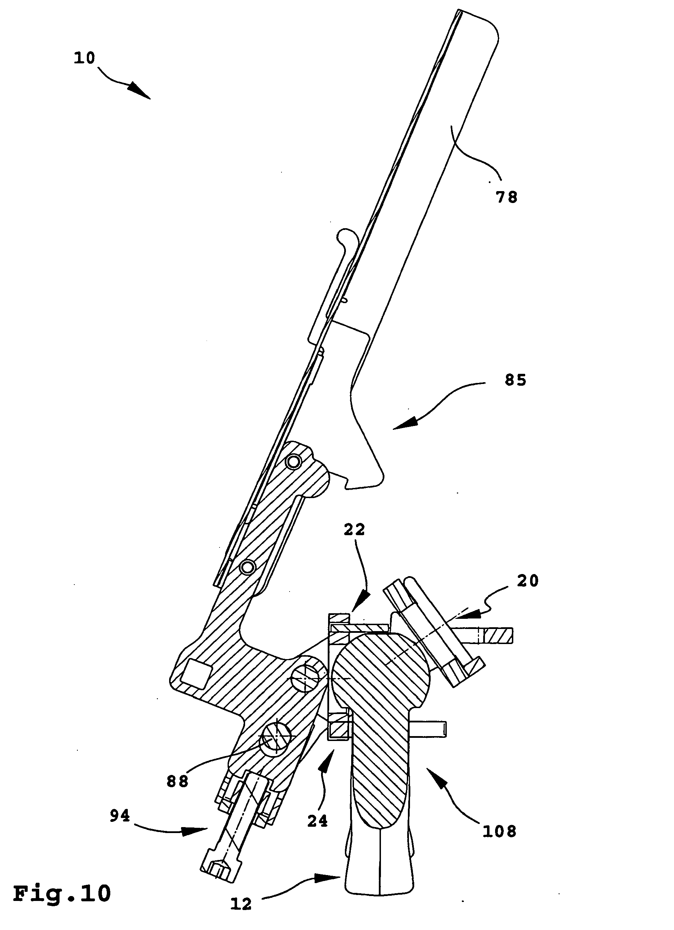

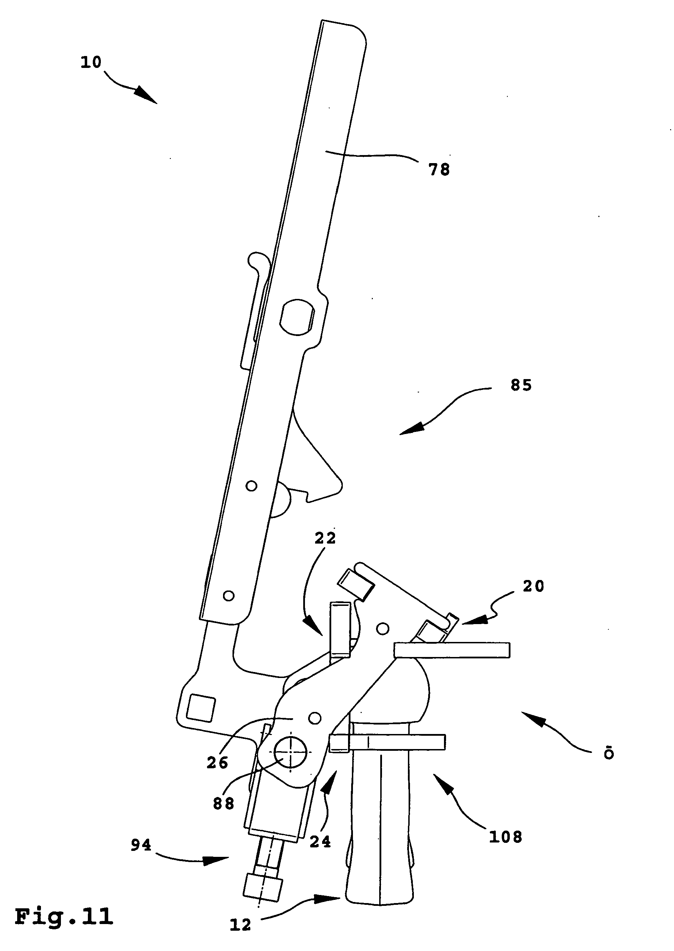

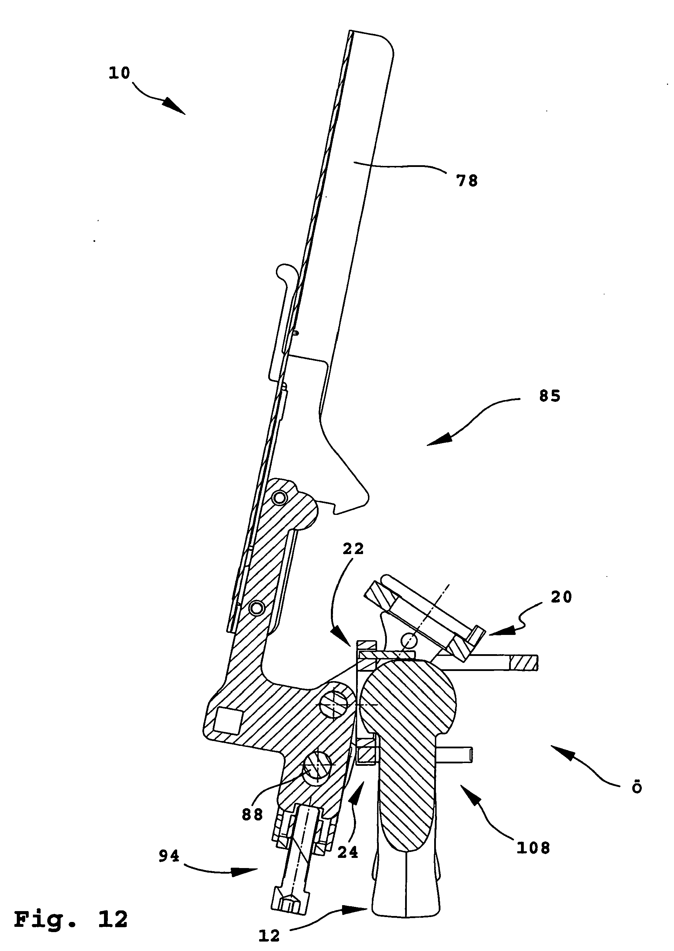

Eine Hecklastträgerkupplung 10 ist zwischen einer in den Figuren 1 bis 4 dargestellten Klemmstellung K und einer in den Figuren 11 und 12 dargestellten vollständigen Öffnungsstellung Ö stufenlos verstellbar. In der Klemmstellung K gemäß den Figuren 1 bis 4 kann die Hecklastträgerkupplung 10 an einer in den Figuren 3 bis 12 näher dargestellten Kraftfahrzeug-Anhängekupplung 12 festgelegt werden.

Die Kraftfahrzeug-Anhängekupplung 12 umfasst eine Kupplungskugel 14, die auf einem Kupplungshals 16 angebracht ist. Der Kupplungshals 16 ist an einem nicht dargestellten Kraftfahrzeug befestigt und dient zur Kraftübertragung zwischen dem Kraftfahrzeug und der Kupplungskugel 14. Die Kupplungskugel 14 ist an einer dem Kupplungshals 16 entgegengesetzten Oberseite mit einer Planfläche versehen und weist am Übergang zum Kupplungshals 16 eine umlaufende Stufe auf. Die Geometrie der Kupplungskugel 14 ist durch Normvorschriften vorgegeben und ist grundsätzlich dafür eingerichtet, als Bindeglied zu einer nicht dargestellten Zugkugelkupplung zu dienen, wie sie an einem Anhänger, insbesondere einem Wohnwagen, angebracht werden kann. Durch die Kugelform ist die Kupplungskugel 14 vorteilhaft zur Ausbildung eines Kugelgelenks mit der Zugkugelkupplung geeignet, wie es für die Ankopplung eines Anhängers an ein Kraftfahrzeug vorteilhaft ist. Die Kupplungskugel 14 ist hingegen weniger zur stabilen Festlegung eines Hecklastträgers geeignet. Für diesen Einsatzfall ist nicht die zwischen Anhängekupplung und Zugkugelkupplung erforderliche Gelenkigkeit, sondern vielmehr eine zuverlässige Festlegung der Hecklastträgerkupplung an der Kupplungskugel 14 gefordert. Daher müssen bei der Anbringung eines Hecklastträgers an der Kupplungskugel 14 besondere konstruktive Maßnahmen für die Hecklastträgerkupplung 10 getroffen werden, um die für diese Zwecke ungünstige Gestaltung der Kupplungskugel auszugleichen und die zuverlässige Festlegung des Hecklastträgers in einem breiten Einsatzbereich sicherzustellen.

Zur Festlegung der Hecklastträgerkupplung 10 an der Kupplungskugel 14 ist eine Klemmeinrichtung 18 vorgesehen, die Klemmteile 20 und 22 umfasst, zwischen denen in der Klemmstellung K ein Klemmbereich 25 ausgebildet ist. Die Klemmteile 20, 22 sind mittels einer nachstehend näher beschriebenen Hebelanordnung 24, die insbesondere als Totpunkthebelanordnung ausgeführt sein kann, derart miteinander gekoppelt, dass sie eine zur Festlegung eines Hecklastträgers ausreichende Klemmkraft auf die Kupplungskugel 14 ausüben können. In der Klemmstellung K gemäß den Figuren 1 bis 4 sind die Klemmteile 20, 22 einander gegenüberliegend angeordnet und klemmen die Kupplungskugel 14 derart, dass zwischen den Klemmteilen 20, 22 und der Kupplungskugel 14 eine Kraftübertragung ermöglicht wird, die eine Abstützung des Eigengewichts des Hecklastträgers und des Gewichts der vom Hecklastträger zu transportierenden Ladung an der Kraftfahrzeug-Anhängekupplung 12 gewährleistet.

Das Klemmteil 20 umfasst zwei exemplarisch parallel zueinander ausgerichtete Zugarme 26, die beispielsweise als Stanzteile aus Metallplatten hergestellt sein können. Die Zugarme 26 sind an einem der Hebelanordnung 24 abgewandten Endbereich jeweils mit einem Klemmkörper 28 verbunden, der exemplarisch ebenfalls als plattenförmiges Stanzteil aus Metall ausgebildet ist. Um eine zuverlässige Kraftübertragung zwischen dem Klemmkörper 28 und den Zugarmen 26 zu gewährleisten, ist der Klemmkörper 28 an einander entgegengesetzten Seitenflächen mit jeweils einer vorzugsweise nutförmigen Ausnehmung versehen. In diese Ausnehmungen sind jeweils die Zugarme 26 eingelegt. Auf einer der Hebelanordnung 24 entgegengesetzten Seite des Klemmkörpers 28 sind die Zugarme 26 jeweils T-förmig und damit breiter als die Nut im Klemmkörper 28 ausgeführt. Damit ermöglichen diese eine Zugkrafteinleitung auf den Klemmkörper 28 in der Art eines Zugankers. Vorzugsweise sind die Zugarme 26 mit dem Klemmkörper 28 verschweißt. Die Zugarme 26 und der Klemmkörper 28 bilden eine U-förmige Anordnung, die besonders günstig zur Einleitung von Zugkräften auf die Zugarme 26 und zur Kraftübertragung vom Klemmkörper 28 auf die Kupplungskugel 14 geeignet ist.

Der Klemmkörper 28 ist mit einer exemplarisch als Durchgangsbohrung ausgeführten Kupplungskugelaufnahme 30 versehen. Die Kupplungskugelaufnahme 30 mündet an einer dem Klemmteil 22 zugewandten, exemplarisch als Planfläche ausgeführten Klemmteiloberfläche 32. Ein Übergang zwischen Kupplungskugelaufnahme 30 und Klemmteiloberfläche 32 ist mit einer umlaufenden Fase 34 versehen, die als Anlagefläche des Klemmteils 20 an der Kupplungskugel 14 in der Klemmstellung K ausgebildet ist. Exemplarisch sind Oberflächen der Zugarme 26, die dem Klemmbereich 25 für die Kupplungskugel 14 zugewandt bzw. entgegengesetzt sind, als Planflächen 36, 38 ausgebildet. Den Planflächen 36, 38 benachbarte Stirnflächen der Zugarme 26 sind zumindest bereichsweise als gekrümmte Kulissenbahnen 40, 42 ausgebildet, deren Funktion nachstehend näher beschrieben wird.

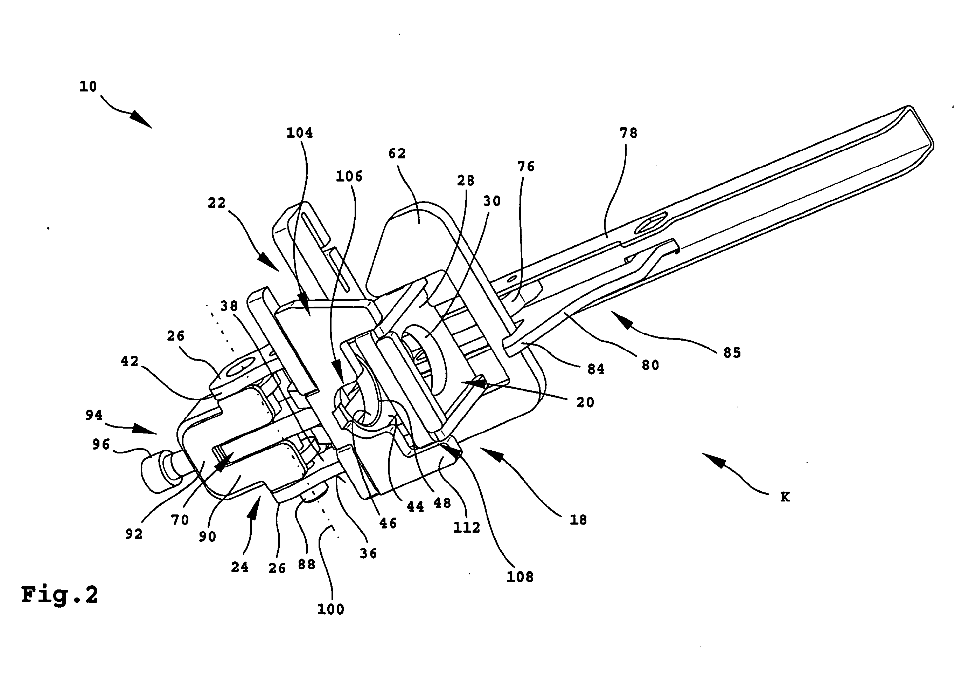

Das Klemmteil 22 ist exemplarisch als plattenförmiges Stanzteil aus Metall hergestellt und weist eine dem Klemmteil 20 zugewandte, beispielsweise als Planfläche ausgebildete Klemmteiloberfläche 44 auf. An der Klemmteiloberfläche 44 mündet eine exemplarisch als Durchgangsbohrung ausgeführte Kupplungskugelaufnahme 46. Dabei ist an einem Übergang zwischen Kupplungskugelaufnahme 46 und Klemmteiloberfläche 44 eine umlaufende Fase 48 ausgebildet, wie dies insbesondere aus der Figur 2 hervorgeht. Die Fase 48 dient zur Vergrößerung der Anlagefläche des Klemmteils 22 an der Kupplungskugel 14.

Am Klemmteil 22 sind in der dargestellten Ausführungsform insgesamt vier Vorsprünge ausgebildet, die orthogonal zu den als Planflächen 36, 38 ausgebildeten größten Oberflächen der Zugarme 26 abragen und zwischen denen die Zugarme 26 geführt sind. Führungsflächen 50, 52, 54, 56 der Vorsprünge bilden mit den Kulissenbahnen 40, 42 der Zugarme 26 eine Führungseinrichtung 55 in der Art einer Kulissenführung. Zwei der Vorsprünge sind bei der vorliegenden Ausführungsform durch einen Quersteg 58 miteinander verbunden und beranden somit eine Ausnehmung 60, durch die der zugeordnete Zugarm 26 geführt ist.

An dem Klemmteil 22, beispielsweise am Quersteg 58, ist vorliegend ein zweckmäßigerweise orthogonal zur Klemmteiloberfläche 44 vorstehender Riegelausleger 62 angebracht, den exemplarisch als U-förmiges Stanzteil aus Metall ausgebildet ist.

An einer dem Klemmteil 20 entgegengesetzten Oberfläche des Klemmteils 22 sind zwei Vorsprünge 64 angebracht, die jeweils mit konzentrisch zueinander ausgerichteten und orthogonal zu den größten Oberflächen der Zugarme 26 ausgerichteten Durchgangsbohrungen versehen sind. Die Durchgangsbohrungen in den Vorsprüngen 64 dienen zur Aufnahme eines Lagerbolzens 66, dessen Mittellängsachse auch als zweite Schwenkachse 68 bezeichnet werden kann. Die zweite Schwenkachse 68 ist bei der dargestellten Ausführungsform parallel zu den als Planflächen ausgeführten Klemmteiloberflächen 32 und 44 ausgerichtet.

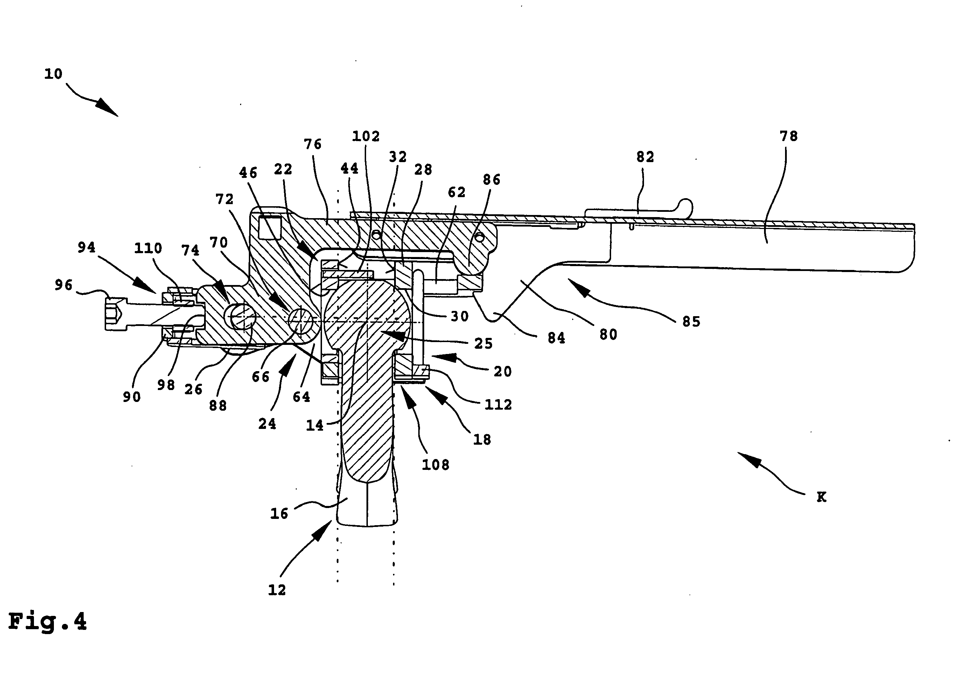

An dem Lagerbolzen 66 ist ein Koppelglied 70 schwenkbeweglich aufgenommen, das bei der vorliegenden Ausführungsform als Stanzteil oder Laserzuschnitt aus Metall hergestellt ist und das sich mit seiner größten Oberfläche in einer Ebene orthogonal zur zweiten Schwenkachse 68 erstreckt. Das Koppelglied 70 weist zwei in der Figur 4 näher dargestellte Lagerausnehmungen 72, 74 auf. Die Lagerausnehmung 72 ist bei der vorliegenden Ausführungsform zur Aufnahme des Lagerbolzens 66 als Durchgangsbohrung ausgebildet. Die Lagerausnehmung 74 ist ein Langloch, das von einem Lagerbolzen 88 durchsetzt wird, und das eine Einstellung des Abstands zwischen den Klemmteilen 20, 22 in der Klemmstellung K ermöglicht. Das Koppelglied 70 weist einen sich seitlich an eine Verbindungslinie zwischen den Lagerausnehmungen 72, 74 angefügten, L-förmigen Hebelarm 76 auf, dessen längerer Schenkel sich bei der vorliegenden Ausführungsform in der Klemmstellung K in Richtung des zweiten Klemmteils 22 und darüber hinaus erstreckt.

An dem Hebelarm 76 ist ein Betätigungshebel 78 angebracht, der sich mit seiner größten Ausdehnung in der in den Figuren 1 bis 4 dargestellten Klemmstellung K im Wesentlichen orthogonal zu den Klemmteiloberfläche 32, 44 erstreckt. Vorzugsweise ist der Betätigungshebel 78 als U-förmig abgekantetes Blechteil ausgebildet und mit Befestigungsmitteln am Hebelarm 76 befestigt. Dem Betätigungshebel 78 ist ein schiebebeweglich in Richtung der größten Erstreckung des Betätigungshebels 78 bewegbarer Riegel 80 einer Verriegelungseinrichtung 85 zugeordnet, der von einer nicht dargestellten Federeinrichtung in eine Verriegelungsstellung vorgespannt ist, wie sie in der Figur 4 dargestellt ist. Der Riegel 80 durchsetzt bereichsweise den mit einer korrespondierenden Ausnehmung versehenen Betätigungshebel 78 und bildet an einer Oberseite des Betätigungshebels 78 ein Betätigungsglied 82 aus. Das Betätigungsglied 82 kann zur Einleitung einer Schiebebewegung auf den Riegel 80 genutzt werden, um diesen aus der Verriegelungsstellung in eine Freigabestellung zu verschieben.

Der Riegel 80 weist einen ebenfalls der Verriegelungseinrichtung 85 zugehörigen Riegelvorsprung 84 auf, der in der Verriegelungsstellung für eine Anlage an einer Unterseite des Riegelauslegers 62 vorgesehen ist und eine formschlüssige Festlegung des Betätigungshebels 78 und des damit gekoppelten Hebelarms 76 am Riegelausleger 62 ermöglicht.

Um eine zuverlässige Positionierung des Betätigungshebels 78 und des damit verbundenen Hebelarms 76 in der Verriegelungsstellung zu gewährleisten, ist bei der vorliegenden Ausführungsform ein Anschlag 86 am Hebelarm 76 vorgesehen, der in der Verriegelungsstellung auf der Oberseite des Riegelauslegers 62 anliegt und damit eine Schwenkbewegung des Hebelarms 76 um die zweite Schwenkachse 68 begrenzt. Der Anschlag 86 liegt bei der dargestellten Ausführungsform einer Hecklastträgerkupplung 10 auf dem Riegelausleger 62 auf, nachdem im Zuge der Schwenkbewegung des Hebelarms 76 aus der Öffnungsstellung Ö in die Klemmstellung der Totpunkt der Hebelanordnung 64 überschritten wurde. In der vom Anschlag 86 und dem Riegelausleger 62 bestimmten Schwenkposition des Hebelarms 76 treten bei Anlage der Klemmteile 20, 22 an der Kupplungskugel 14 hohe innere Spannungen in der Hecklastträgerkupplung 10, unter anderem an den Zugarmen 26 zwischen den Klemmteilen 20, 22 auf, die die erforderlichen Klemmkräfte sicherstellen.

Die als Langloch ausgeführte Ausnehmung 74 im Koppelglied 70 wird von einem Lagerbolzen 88 durchsetzt, der die beiden Zugarme 26 miteinander verbindet und der ein Ankerteil 90 durchdringt, das U-förmig ausgebildet ist. Eine Mittellängsachse des Lagerbolzens 88 bildet die erste Schwenkachse 100.

Die beiden parallelen Schenkel des U-förmigen Ankerteils 90 überbrücken jeweils einen Spalt zwischen dem Koppelglied 70 und dem jeweils zugeordneten Zugarm 26. An einem die Schenkel des U-förmigen Ankerteils verbindenden Quersteg 92 ist ein Einstellmittel 94 zur Veränderung des Abstands der Klemmteile 20, 22 vorgesehen. Das Einstellmittel 94 umfasst eine Einstellschraube 96, die in den Darstellungen der Figuren 1 bis 4 orthogonal zu den Klemmteiloberflächen 32, 44 ausgerichtet ist und an einer den Klemmteilen 20, 22 entgegengesetzten Stirnfläche 98 des Koppelglieds 70 anliegt. Durch Verstellen der Einstellschraube 96 kann ein Abstand zwischen den Lagerbolzen 66 und 88 verändert und somit eine Abstandseinstellung zwischen den beiden Klemmteilen 20 und 22 vorgenommen werden.

Wie aus der Figur 4 hervorgeht, ist bei dem vorliegenden Ausführungsbeispiel die Lage der zweiten Schwenkachse 68 derart ausgewählt, dass eine durch die zweite Schwenkachse 68 verlaufende Normale auf die Klemmteiloberfläche 32, 44 durch den Mittelpunkt der Kupplungskugel 14 verläuft. Eine Normale durch die Klemmteiloberflächen 32, 44, die die erste Schwenkachse 100 schneidet, ist zu der Normalen durch die zweite Schwenkachse 68 räumlich beabstandet angeordnet.

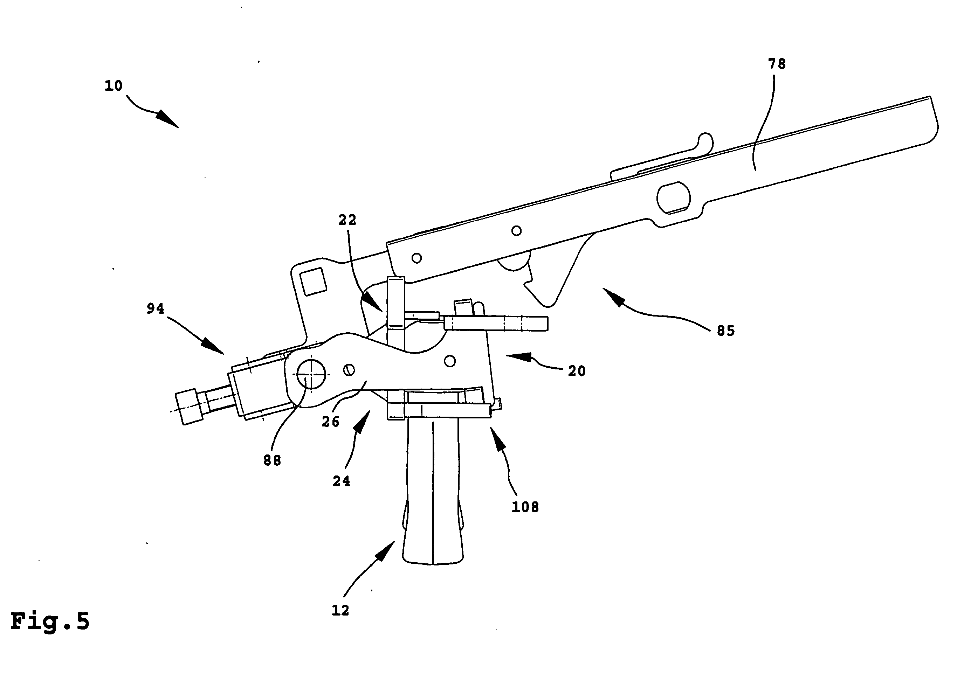

Von dem Klemmteil 22 ragt eine vorzugsweise orthogonal zur Klemmteiloberfläche 44 ausgerichtete Kugelstütze 102 ab, die sich in der Klemmstellung K in Richtung des Klemmteils 20 erstreckt und die für eine zeitweilige Auflage an der Planfläche der Kupplungskugel 14 vorgesehen ist. Zudem ragt von dem Klemmteil 22 eine gabelförmige Halsstütze 104 ab, die im Wesentlichen parallel zur Kugelstütze 102 ausgerichtet ist und die in der teilweise geöffneten Stellung und in der Öffnungsstellung Ö gemäß den Figuren 5 bis 12 zusammen mit der Kugelstütze 102 für eine Grobausrichtung der Hecklastträgerkupplung 10 und des daran angebrachten, nicht dargestellten Hecklastträgers, vorgesehen ist. Wie aus der Figur 2 zu erkennen ist, weist die Halsstütze 104 einen Zentrierbereich 106 auf, der eine im Wesentlichen U-förmige Ausnehmung begrenzt, deren Stirnflächen in der Öffnungsstellung Ö für eine zeitweilige Anlage am Kupplungshals 16 vorgesehen sind.

An den Zentrierbereich 106 schließt sich ein Verriegelungsbereich 108 an, der in der dargestellten Klemmstellung K für eine formschlüssige Aufnahme und Abstützung des Klemmteils 20 am Klemmteil 22 vorgesehen ist. Dadurch kann eine Auslenkung des Klemmteils 20 bei einer Einwirkung von Drehmomenten um eine senkrecht zur größten Oberfläche der Halsstütze 104 verlaufende Drehachse vermieden werden. Der Verriegelungsbereich 108 verhindert somit eine elastische Deformation der Zugarme 26 um eine orthogonal zur größten Oberfläche der Halsstütze 104 verlaufende Schwenkachse und vermeidet dadurch auch unerwünschte Drehmomenteinwirkungen auf den Lagerbolzen 88.

Wie aus der Figur 4 entnommen werden kann, sind sowohl die zweite Schwenkachse 68 als auch die erste Schwenkachse 100 auf einer dem ersten Klemmteil 20 und dem Klemmbereich 25 entgegengesetzten Seite 23 des Klemmteils 22 angeordnet. Durch die Kopplung der beiden Lagerbolzen 66 und 88 mittels des Koppelglieds 70 und die Gestaltung des ersten Klemmteils 20 mit den Zugarmen 26, die sich über die dem ersten Klemmteil 20 entgegengesetzte Seite des Klemmteils 22 hinaus erstrecken und mit dem Lagerbolzen 88 verbunden sind, wird eine Hebelanordnung 24, insbesondere eine Totpunkthebelanordnung, gebildet. Dabei ist vorgesehen, dass der Lagerbolzen 88 und die dadurch gebildete erste Schwenkachse 100 durch eine Schwenkbewegung des Koppelglieds 70 um die zweite Schwenkachse 68 auf einer Kreisbahn bewegt werden. Durch die Bewegung auf der Kreisbahn verändert sich der Abstand der ersten Schwenkachse 100 zu der Klemmteiloberfläche 44. Ausgehend von der in Figur 4 dargestellten Verriegelungsstellung nimmt bei einer Schwenkbewegung des Koppelglieds 70 um den Lagerbolzen 66 der Abstand zunächst geringfügig zu, um anschließend bis hin zur Öffnungsstellung Ö abzunehmen. Somit kann durch Verschwenken des Koppelglieds 70 um den Lagerbolzen 66 eine Vergrößerung des Abstands zwischen den Klemmteilen 20 und 22 und damit eine Freigabe der gemäß der Darstellung der Figur 4 geklemmten Kupplungskugel 14 erreicht werden.

Durch den geringfügigen Versatz zwischen den die Schwenkachsen 68 und 100 schneidenden Normalen zur Klemmteiloberfläche 44 wird in der Verriegelungsstellung gemäß Figur 4 ein stabiler Verriegelungszustand erreicht. Dies beruht darauf, dass in der Klemmstellung K, in der der Abstand zwischen den Klemmteilen 20, 22 zumindest nahezu minimal ist, elastische Deformationen der Klemmteile 20, 22 und der Lagerbolzen 66, 88 und des Koppelglieds 70 der Hebelanordnung 24 und damit verbundene innere Spannungen vorliegen. Diese inneren Spannungen äußern sich einerseits in orthogonal zu den Klemmteiloberflächen 32, 44 ausgerichteten Klemmkräften und andererseits in einem gemäß der Darstellung der Figur 4 in Richtung des Uhrzeigersinns gerichteten Drehmoment auf den Hebelarm 76. Der Hebelarm 76 liegt in der Klemmstellung K mit seinem Riegelvorsprung 84 an dem Riegelausleger 62 an, wodurch eine die Klemmkräfte reduzierende Schwenkbewegung des Koppelglieds 70 verhindert wird. In entgegengesetzter Richtung bewegt sich der Hebelarm 76 ebenfalls nicht ohne eine äußere Drehmomenteinleitung, da in dieser Schwenkrichtung ein Überwinden des Totpunkts erforderlich wäre. Somit ist eine sichere Verriegelung der Hecklastträgerkupplung 10 an der Kupplungskugel 14 sichergestellt, die zusätzlich durch die Wirkung des Riegels 80 unterstützt wird.

Um die Hecklastträgerkupplung 10 von der Kupplungskugel 14 zu lösen, muss zunächst der Riegel 80 aus der Riegelstellung gemäß Figur 4 in eine Freigabestellung gebracht werden. Dies kann bei der vorliegenden Ausführungsform durch eine translatorische Verschiebung des Betätigungsglieds 82 in Richtung des freien Endes des Betätigungshebels 78 erfolgen. Damit wird der Riegelvorsprung 84 außer Eingriff zu dem Riegelausleger 62 gebracht, so dass eine Schwenkbewegung des Betätigungshebels 78 in einer gemäß den Figuren 5 bis 12 entgegen dem Uhrzeigersinn gerichteten Entriegelungsbewegung erfolgen kann. Bei einer solchen Schwenkbewegung muss der Lagerbolzen 88 zunächst den Scheitelpunkt oder Totpunkt der Kreisbahn um den Lagerbolzen 66 überwinden, in der die Klemmkräfte und die inneren Spannungen maximal sind, da der Abstand zwischen den Klemmteilen 20 und 22 minimal ist.

Bei Anordnung einer Kupplungskugel 14 zwischen den Klemmteilen 20, 22 tritt somit ausgehend von der Klemmstellung K zunächst eine Vergrößerung der elastischen Deformation der Klemmteile 20, 22, der Zugarme 26 und der Lagerbolzen 66, 88 sowie des Koppelglieds 70 auf. Sobald die Schwenkbewegung des Betätigungshebels 78 entgegen dem Uhrzeigersinn zu einer Überwindung des Scheitelpunkts oder Totpunkts der Kreisbahn um den Lagerbolzen 66 geführt hat, nähert sich der Lagerbolzen 88 dem Klemmteil 22 an. Dadurch findet eine Verlagerung des Klemmteils 20 gegenüber dem Klemmteil 22 statt, die sich in einer Vergrößerung des Abstands zwischen den beiden Klemmteilen äußert, wie dies aus den Figuren 5 bis 12 ersichtlich ist. Dadurch wird die Kupplungskugel 14 freigegeben und die Hecklastträgerkupplung 10 kann von der Kraftfahrzeug-Anhängekupplung 12 abgenommen werden.

Um zu verhindern, dass sich das Klemmteil 20 im Zuge der Öffnungsbewegung unter dem Einfluss der Schwerkraft nach unten in Richtung des Kupplungshalses 16 verlagert, sind an den Zugarmen 26 die Kulissenbahnen 40 und 42 vorgesehen, die mit den Führungsflächen 50, 52, 54 und 56 des Klemmteils 22 in Wirkverbindung stehen, insbesondere zumindest bereichsweise abgleiten, wie dies beispielsweise den Figuren 5, 7, 9 und 11 zu entnehmen ist. Die Kulissenbahnen 40, 42 der Zugarme 26 sind so ausgelegt, dass sie in der Klemmstellung K gemäß Figuren 1 bis 4 eine in einem vorgebbaren Schwenkwinkelbereich freie Einstellbarkeit des Klemmteils 20 um die erste Schwenkachse 100 zulassen, um eine statische Überbestimmung der Hecklastträgerkupplung 10 in der Klemmstellung K zu vermeiden.

Ausgehend von der Klemmstellung kommen die nach unten gewandten Kulissenbahnen 42 der Zugarme 26 bei einer Öffnungsbewegung gemäß der Darstellung der Figuren 5 bis 12 (die bei Betrachtung in entgegengesetzter Reihenfolge eine Klemmbewegung offenbaren) in Anlage zu den jeweils unteren Führungsflächen 52, 56 des Klemmteils 22 und gleiten auf diesen während der Öffnungsbewegung bis in die Öffnungsstellung Ö gemäß Figur 12 ab. Dabei richtet sich das Klemmteil 20 in einer gleichsinnig zur Schwenkbewegung des Betätigungshebels 78 stattfindenden Bewegung (gemäß der Darstellung der Figuren 5 bis 12 entgegen dem Uhrzeigersinn) auf und wird dadurch bis in eine oberhalb der Kupplungskugel 14 angeordnete Öffnungsstellung Ö gebracht.

In der Öffnungsstellung Ö gemäß Figur 12 liegen sowohl die oberen Stirnflächen 40 als auch die unteren Stirnflächen 42 an den jeweiligen Führungsflächen 50, 52, 54, 56 an. Dadurch ergibt sich eine Zwangsführung für das Klemmteil 20, die vorzugsweise auch als Endanschlag für die Öffnungsbewegung des Betätigungshebels 78 dient.

Bei einer Schwenkbewegung des Betätigungshebels 78 aus der Öffnungsstellung Ö gemäß Figur 12 in die Klemmstellung K gemäß den Figuren 1 bis 4 kann bei entsprechender Einstellung des Reibwertes zwischen dem Klemmteil 20 und dem Ankerteil 90 eine zumindest teilweise Anlage der oberen Stirnflächen 40 an den oberen Führungsflächen 50, 54 vorgesehen sein. Dabei kann die Kontur der Stirnflächen 40 derart gewählt sein, dass das Klemmteil 20 eine Abgleitbewegung über die Kupplungskugel 14 in Richtung der Klemmstellung K vollzieht. Nach Durchschreiten des Scheitelpunkts, der gleichbedeutend mit dem Totpunkt der Schwenkbewegung ist, der Schwenkkurve für den Lagerbolzen 88 bis zur Anlage des Riegelvorsprungs 84 auf dem Riegelausleger 62 werden die inneren Spannungen wieder leicht reduziert. Dadurch wird erreicht, dass sich die Hebelanordnung 24 in einem stabilen Zustand befindet. Ein labiler Zustand für die Hecklastträgerkupplung 10, wie er im Scheitelpunkt der Schwenkkurve vorliegt, wird vermieden.

Mit dem Einnehmen der Klemmstellung K durch das Klemmteil 20 wird dieses zwischen die gabelförmig ausgebildeten Zungen 112 des Verriegelungsbereichs 108 eingefahren, so dass sich dadurch eine seitliche Verriegelung des Klemmteils 20 ergibt. Dadurch werden Drehmomente, wie sie um eine Hochachse der Kraftfahrzeug-Anhängekupplung 12 auf die Hecklastträgerkupplung 10 einwirken können, abgefangen und eine unerwünschte Deformation der Zugarme 26 um eine Biegeachse parallel zur Hochachse wird vermieden. Die Kugelstütze 102 und die Halsstütze 104 sind derart am Klemmteil 22 angeordnet, dass sie mit dem Einnehmen der Klemmstellung K durch das Klemmteil 20 in der Regel von der Kupplungskugel 14 bzw. vom Kupplungshals 16 beabstandet sind, wie dies aus Figur 4 ersichtlich ist. Dadurch wird eine freie Einstellbarkeit der Klemmteile 20, 22 gewährleistet und eine statische Überbestimmung vermieden.

Eine Einstellung der Klemmkraft, die von den Klemmteilen 20, 22 auf die Kupplungskugel 14 ausgeübt wird, findet über die Einstellschraube 96 statt, die in einer am Ankerteil 90 befestigten Gewindehülse 110 aufgenommen ist und sich stirnseitig am Koppelglied 70 abstützt. Bei einer Schraubbewegung der Einstellschraube 96 in Richtung des Lagerbolzens 66 findet eine Verlagerung des Ankerteils 90 und des damit verbundenen Klemmteils 20 in Richtung des Klemmteils 22 statt. Dadurch wird der Abstand zwischen den Klemmteilen 20, 22 reduziert und damit in der Klemmstellung K eine erhöhte Klemmkraft auf die Kupplungskugel 14 ausgeübt.

## Patentansprüche

1. Hecklastträgerkupplung zur lösbaren Festlegung eines Hecklastträgers an einer Kupplungskugel (14) einer Kraftfahrzeug-Anhängekupplung (12), mit einer Klemmeinrichtung (18), die zwei Klemmteile (20, 22) und wenigstens ein Koppelglied (70) umfasst, wobei die Klemmteile (20, 22) zwischen einer zum Aufsetzen des Hecklastträgers auf die Kupplungskugel (14) vorgesehenen Öffnungsstellung (Ö) und einer zur Festlegung des Hecklastträgers an der Kupplungskugel (14) vorgesehenen Klemmstellung (K) schwenkbeweglich relativ zueinander bewegbar und in der Klemmstellung (K) einander gegenüberliegend angeordnet sind, und in der Klemmstellung (K) einen Klemmbereich (25) zur Aufnahme der Kupplungskugel (14) begrenzen, und wobei das Koppelglied (70) die Klemmteile (20, 22) miteinander verbindet und jeweils schwenkbeweglich an den Klemmteilen (20, 22) angelenkt ist, wobei eine zwischen einem ersten Klemmteil (20) und dem Koppelglied (70) ausgebildete erste Schwenkachse (100) und eine davon räumlich beabstandete, zwischen einem zweiten Klemmteil (22) und dem Koppelglied (70) ausgebildete zweite Schwenkachse (68) auf einer dem Klemmbereich (25) entgegengesetzten Seite (23) des zweiten Klemmteils (22) angeordnet sind und wenigstens einem der Klemmteile (20, 22) eine Führungseinrichtung (55) zur Vorgabe einer relativen Stellung der Klemmteile (20, 22) zwischen der Öffnungsstellung (Ö) und der Klemmstellung (K) zugeordnet ist und die Führungseinrichtung (55) wenigstens eine Kulissenbahn (40, 42) zur Positionierung der Klemmteile (20, 22) zueinander in Abhängigkeit von einem Schwenkwinkel des Koppelglieds (70) gegenüber dem zweiten Klemmteil (22) umfasst, **dadurch gekennzeichnet, dass** die Führungseinrichtung für eine Freigabe der Klemmteile (20, 22) in der Klemmstellung (K) ausgebildet ist.

2. Hecklastträgerkupplung nach Anspruch 1, **dadurch gekennzeichnet, dass** die Klemmteile (20, 22) zusammen mit dem wenigstens einen Koppelglied (70) eine zwischen der Öffnungsstellung (Ö) und der Klemmstellung (K) über einen Schwenktotpunkt des Koppelglieds (70) hinaus einstellbare Totpunkthebelanordnung (24) bilden und/oder dass die erste und die zweite Schwenkachse (68, 100) parallel zueinander ausgerichtet sind.

3. Hecklastträgerkupplung nach einem der vorhergehenden Ansprüche, **dadurch gekennzeichnet, dass** das erste Klemmteil (20) wenigstens einen Zugarm (26) aufweist, der mittels der ersten Schwenkachse (100) mit dem Koppelglied (70) schwenkbeweglich verbunden ist und der sich entlang des Klemmbereichs (25) bis über die dem Klemmbereich (25) entgegengesetzte Seite des zweiten Klemmteils (22) erstreckt.

4. Hecklastträgerkupplung nach Anspruch 3, **dadurch gekennzeichnet, dass** das erste Klemmteil (20) zwei Zugarme (26) sowie einen zwischen den Zugarmen (26) angeordneten Klemmkörper (28) umfasst, die eine im Wesentlichen U-förmige Anordnung bilden.

5. Hecklastträgerkupplung nach einem der vorhergehenden Ansprüche, **dadurch gekennzeichnet, dass** das erste und/oder das zweite Klemmteil (20, 22) jeweils wenigstens eine Kupplungskugelaufnahme (30, 46), vorzugsweise eine Ausnehmung, insbesondere eine Durchgangsbohrung aufweisen, die in der Klemmstellung (K) zur bereichsweisen Anlage an der Kupplungskugel (14) ausgebildet ist.

6. Hecklastträgerkupplung nach einem der vorhergehenden Ansprüche, **dadurch gekennzeichnet, dass** die Führungseinrichtung (55) wenigstens eine dem ersten Klemmteil (20) zugeordnete Kulissenbahn (40, 42) umfasst.

7. Hecklastträgerkupplung nach Anspruch 6, **dadurch gekennzeichnet, dass** die Kulissenbahn (40, 42) an dem Zugarm (26) des ersten Klemmteils (20) ausgebildet ist und/oder dass das zweite Klemmteil (22) wenigstens eine Führungsfläche (50, 52, 54, 56) aufweist, an der die Kulissenbahn (40, 42) zumindest bereichsweise anliegt.

8. Hecklastträgerkupplung nach einem der Anspräche 5 bis 7, **dadurch gekennzeichnet, dass** die Führungseinrichtung für eine Zwangsverschwenkung des ersten Klemmteils (22) aus der Klemmstellung (K), in der sich die Klemmteile (20, 22) gegenüberliegen, in eine Öffnungsstellung (ö), in der die Klemmteile (20, 22) einen spitzen Winkel miteinander einschließen, ausgebildet ist und/oder dass die Führungseinrichtung (55) für eine Schwenkbewegung des ersten Klemmteils (20) aus der dem zweiten Klemmteil (22) gegenüberliegenden Klemmstellung (K) in eine oberhalb des Klemmbereichs (25), insbesondere oberhalb des zweiten Klemmteils (22), angeordnete Öffnungsstellung (Ö) ausgebildet ist.

9. Hecklastträgerkupplung nach einem der vorhergehenden Ansprüche, **dadurch gekennzeichnet, dass** an dem Koppelglied (70) ein Betätigungshebel (78) zur Einleitung von Bedienkräften eines Benutzers auf die Klemmteile (20, 22) angebracht ist.

10. Hecklastträgerkupplung nach Anspruch 9, **dadurch gekennzeichnet, dass** der Betätigungshebel (78) in der Öffnungsstellung (Ö) der Klemmteile (20, 22) bei Aufsetzen des Hecklastträgers (10) auf die Kupplungskugel (14) zumindest nahezu in vertikaler Richtung und in der Klemmstellung (K) bei geklemmter Kupplungskugel (14) zumindest nahezu in horizontaler Richtung, insbesondere den Klemmbereich (25) überragend, ausgerichtet ist und/oder dass Einstellmittel (94) zur Einstellung einer Beabstandung der Klemmteile (20, 22) in der Klemmstellung (K) vorgesehen sind.

11. Hecklastträgerkupplung nach Anspruch 10, **dadurch gekennzeichnet, dass** die Einstellmittel (94) für eine Einstellung eines Abstands zwischen der ersten und der zweiten Schwenkachse (68, 100) in der Klemmstellung (K) eingerichtet sind.

12. Hecklastträgerkupplung nach einem der vorhergehenden Ansprüche, **dadurch gekennzeichnet, dass** das zweite Klemmteil (22) eine in Richtung des Klemmbereichs (25) abragende, zur Anlage am Kupplungshals (16) ausgebildete Halsstütze (104) und/oder eine in Richtung des Klemmbereichs (25) abragende, zur Auflage auf der Oberseite der Kupplungskugel (14) ausgebildete Kugelstütze (102) aufweist, die beim Aufsetzen der Hecklastträgerkupplung (10) auf die Kupplungskugel (14) in Anlage an eine Oberfläche der Kupplungskugel (14) oder des Kupplungshalses (16) kommen, um eine Ausrichtung der Hecklastträgerkupplung (10) gegenüber der Kraftfahrzeug-Anhängekupplung (12) zu bewirken und/oder dass zur Kopplung des ersten Klemmteils (20) und des zweiten Klemmteils (22) mittels des Koppelglieds (70) genau zwei Schwenkachse (68, 100) vorgesehen sind.

13. Hecklastträgerkupplung nach einem der vorhergehenden Ansprüche, **dadurch gekennzeichnet, dass** eine Verriegelungseinrichtung (85) zur Verriegelung des Koppelglieds (70), insbesondere eines mit dem Koppelglied (70) verbundenen Betätigungshebels (78), in der Klemmstellung (K) ausgebildet ist.

14. Hecklastträger zur Anbringung an einer Kraftfahrzeug-Anhängekupplung (12), **gekennzeichnet durch** eine Hecklastträgerkupplung (10) nach einem der vorhergehenden Ansprüche.

## Claims

1. Rear load carrier coupling for the releasable location of a rear load carrier on a hitch ball (14) of a motor vehicle trailer coupling (12), comprising a clamping device (18) which includes two clamping parts (20, 22) and at least one coupling member (70), wherein the clamping parts (20, 22) are pivotable relative to each other between an open position (Ö) provided for fitting the rear load carrier to the hitch ball (14) and a clamping position (K) provided for locating the rear load carrier on the hitch ball (14) and wherein they are arranged opposite each other in the clamping position (K) and bound a clamping region (25) for the accommodation of the hitch ball (14) in the clamping position (K), and wherein the coupling member (70) connects the clamping parts (20, 22) to each other and is pivotably hinged to the clamping parts (20, 22), wherein a first pivot axis (100) formed between a first clamping part (20) and the coupling member (70) and a second pivot axis (68) formed between a second clamping part (22) and the coupling member (70) and located at a spatial distance from the first pivot axis (100) are arranged at a side (23) of the second clamping part (22) which is opposite the clamping region (25), and wherein a guide device (55) for presetting a relative position of the clamping parts (20, 22) between the open position (Ö) and the clamping position (K) is assigned to at least one of the clamping parts (20, 22) and the guide device (55) includes at least one gate track (40, 42) for positioning the clamping parts (20, 22) relative to each other in dependence on a pivot angle of the coupling member (70) with respect to the second clamping part (22), **characterised in that** the guide device is designed for releasing the clamping parts (20, 22) in the clamping position (K).

2. Rear load carrier coupling according to claim 1, **characterised in that** the clamping parts (20, 22) together with the at least one coupling member (70) form a dead-centre lever arrangement (24) adjustable between the open position (Ö) and the clamping position (K) beyond a pivot dead-centre of the coupling member (70), and/or **in that** the first and second pivot axes (68, 100) are oriented parallel to each other.

3. Rear load carrier coupling according to any of the preceding claims, **characterised in that** the first clamping part (20) comprises at least one tie arm (26) which is pivotably connected to the coupling member (70) by means of the first pivot axis (100) and which extends along the clamping region (25) beyond the side of the second clamping part (22) which is opposite the clamping region (25).

4. Rear load carrier coupling according to claim 3, **characterised in that** the first clamping part (20) comprises two tie arms (26) and a clamping body (28) arranged between the tie arms (26), which together form a substantially U-shaped arrangement.

5. Rear load carrier coupling according to any of the preceding claims, **characterised in that** the first and/or the second clamping part (22, 22) comprise(s) at least one hitch ball receptacle (30, 46), preferably a recess and in particular a through-hole, which is designed to bear against a part of the hitch ball (14) in the clamping position (K).

6. Rear load carrier coupling according to any of the preceding claims, **characterised in that** the guide device (55) includes at least one gate track (40, 42) assigned to the first clamping part (20).

7. Rear load carrier coupling according to claim 6, **characterised in that** the gate track (40, 42) is formed on the tie arm (26) of the first clamping part (20), and/or **in that** the second clamping part (22) has at least one guide surface (50, 52, 54, 56), against which at least a part of the gate track (40, 42) bears.

8. Rear load carrier coupling according to any of claims 5 to 7, **characterised in that** the guide device is designed for a forced pivoting of the first clamping part (22) from the clamping position (K), in which the clamping parts (20, 22) are opposite each other, into an open position (Ö), in which the clamping parts (20, 22) enclose an acute angle, and/or **in that** the guide device (55) is designed for a pivoting movement of the first clamping part (20) from the clamping position (K) opposite the second clamping part (22) into an open position (Ö) above the clamping region (25), in particular above the second clamping part (22).

9. Rear load carrier coupling according to any of the preceding claims, **characterised in that** an operating lever (78) for the application of operating forces of a user to the clamping parts (20, 22) is fitted to the coupling member (70).

10. Rear load carrier coupling according to claim 9, **characterised in that** the operating lever (78) is oriented at least almost in the vertical direction in the open position (Ö) of the clamping parts (20, 22) while the rear load carrier (10) is fitted to the hitch ball (14) and at least almost in the horizontal direction, in particular extending beyond the clamping region (25), in the clamping position (K) in which the hitch ball (14) is clamped, and/or **in that** adjusting means (94) are provided for adjusting a spacing of the clamping parts (20, 22) in the clamping position (K).

11. Rear load carrier coupling according to claim 10, **characterised in that** the adjusting means (94) are configured for the adjustment of a distance between the first and second pivot axes (68, 100) in the clamping position (K).

12. Rear load carrier coupling according to any of the preceding claims, **characterised in that** the second clamping part (22) comprises a neck support (104) projecting towards the clamping region (25) and designed for bearing against the coupling neck (16) and/or a ball support (102) projecting towards the clamping region (25) and designed for bearing against the top of the hitch ball (14), which supports come to bear against a surface of the hitch ball (14) or the coupling neck (16) as the rear load carrier coupling (10) is placed on the hitch ball (14) in order to effect an alignment of the rear load carrier coupling (10) with respect to the trailer coupling (12) of the motor vehicle, and/or **in that** precisely two pivot axes (68, 100) are provided to couple the first clamping part (20) and the second clamping part (22) by means of the coupling member (70).

13. Rear load carrier coupling according to any of the preceding claims, **characterised in that** a locking device (84) is configured to lock the coupling member (70), in particular an operating lever (78) connected to the coupling member (70), in the clamping position (K).

14. Rear load carrier for mounting on a motor vehicle trailer coupling (12), **characterised by** a rear load carrier coupling (10) according to any of the preceding claims.

## Revendications

1. Dispositif d'accouplement de porte-charge arrière permettant la fixation amovible d'un porte-charge arrière au niveau d'une rotule d'attelage (14) d'un dispositif d'attelage de véhicule automobile (12), avec un dispositif de serrage (18) comportant deux pièces de serrage (20, 22) et au moins un organe d'accouplement (70), dans lequel les pièces de serrage (20, 22) sont disposées de manière mobile l'une par rapport à l'autre en pivotement entre une position d'ouverture (Ö) prévue pour la mise en place du porte-charge arrière sur la rotule d'attelage (14) et une position de serrage (K) prévue pour la fixation du porte-charge arrière au niveau de la rotule d'attelage (14), les pièces de serrages (20,22) étant disposées l'une en face de l'autre dans la position de serrage (K) et délimitant dans la position de serrage (K) une zone de serrage (25) pour la réception de la rotule d'attelage (14), et dans lequel l'organe d'accouplement (70) relie entre elles les pièces de serrage (20, 22) et est articulé respectivement de manière pivotante sur les pièces de serrage (20, 22), dans lequel un premier axe de pivotement (100), réalisé entre une première pièce de serrage (20) et l'organe d'accouplement (70), et un deuxième axe de pivotement (68) espacé du premier axe de pivotement (100), réalisé entre une deuxième pièce de serrage (22) et l'organe d'accouplement (70), sont disposés sur un côté (23) de la deuxième pièce de serrage (22) opposé à la zone de serrage (25), et un dispositif de guidage (55) permettant de définir une position relative des pièces de serrage (20, 22), entre la position d'ouverture (Ö) et la position de serrage (K) est affecté à au moins l'une des pièces de serrage (20, 22) et le dispositif de guidage (55) comprend au moins une voie de coulisse (40, 42) pour le positionnement des pièces de serrage (20, 22) l'une par rapport à l'autre en fonction d'un angle de pivotement de l'organe d'accouplement (70) par rapport à la deuxième pièce de serrage (22), **caractérisé en ce que** le dispositif de guidage est réalisé pour une libération des pièces de serrage (20, 22) dans la position de serrage (K).

2. Dispositif d'accouplement de porte-charge arrière selon la revendication 1, **caractérisé en ce que** les pièces de serrage (20, 22) forment conjointement avec ledit au moins un organe d'accouplement (70) un système de levier de point mort (24) réglable au-delà d'un point mort de pivotement de l'organe d'accouplement (70) entre la position d'ouverture (Ö) et la position de serrage (K) et/ou **en ce que** le premier et le deuxième axe de pivotement (68, 100) sont orientés parallèlement l'un à l'autre.

3. Dispositif d'accouplement de porte-charge arrière selon l'une quelconque des revendications précédentes, **caractérisé en ce que** la première pièce de serrage (20) présente au moins un bras de traction (26) qui est relié de manière pivotante à l'organe d'accouplement (70) au moyen du premier axe de pivotement (100) et qui s'étend le long de la zone de serrage (25) jusqu'au-delà du côté de la deuxième pièce de serrage (22) opposé à la zone de serrage (25).

4. Dispositif d'accouplement de porte-charge arrière selon la revendication 3, **caractérisé en ce que** la première pièce de serrage (20) comporte deux bras de traction (26) ainsi qu'un corps de serrage (28) disposé entre les bras de traction (26) qui forment un système essentiellement en forme de U.

5. Dispositif d'accouplement de porte-charge arrière selon l'une quelconque des revendications précédentes, **caractérisé en ce que** la première et/ou la deuxième pièce de serrage (20, 22) présentent respectivement au moins un logement de rotule d'attelage (30, 46), de préférence un évidement, en particulier un perçage traversant qui est réalisé dans la position de serrage (K) pour s'appliquer par section au niveau de la rotule d'attelage (14).

6. Dispositif d'accouplement de porte-charge arrière selon l'une quelconque des revendications précédentes, **caractérisé en ce que** le dispositif de guidage (55) comporte au moins une voie de coulisse (40, 42) affectée à la première pièce de serrage (20).

7. Dispositif d'accouplement de porte-charge arrière selon la revendication 6, **caractérisé en ce que** la voie de coulisse (40, 42) est réalisée au niveau du bras de traction (26) de la première pièce de serrage (20) et/ou en ce que la deuxième pièce de serrage (22) présente au moins une surface de guidage (50, 52, 54, 56) contre laquelle la voie de coulisse (40, 42) s'appuie au moins localement.

8. Dispositif d'accouplement de porte-charge arrière selon l'une quelconque des revendications 5 à 7, **caractérisé en ce que** le dispositif de guidage est réalisé pour un pivotement forcé de la première pièce de serrage (22) d'une position de serrage (K), dans laquelle les pièces de serrage (20, 22) se font face, à une position d'ouverture (Ö), dans laquelle les pièces de serrage (20, 22) forment un angle aigu entre elles et/ou **en ce que** le dispositif de guidage (55) est réalisé pour un pivotement de la première pièce de serrage (20) de la position de serrage (K) opposée à la deuxième pièce de serrage (22) à une position d'ouverture (Ö) disposée au-dessus de la zone de serrage (25), en particulier au-dessus de la deuxième pièce de serrage (22).

9. Dispositif d'accouplement de porte-charge arrière selon l'une quelconque des revendications précédentes, **caractérisé en ce qu'**un levier d'actionnement (78) est monté au niveau de l'organe d'accouplement (70) pour introduire des forces de commande d'un utilisateur sur les pièces de serrage (20, 22).

10. Dispositif d'accouplement de porte-charge arrière selon la revendication 9, **caractérisé en ce que** le levier d'actionnement (78) est orienté dans la position d'ouverture (Ö) des pièces de serrage (20, 22) lors de la mise en place du porte-charge arrière (10) sur la rotule d'attelage (14), du moins pratiquement dans la direction verticale et dans la position de serrage (K) lorsque la rotule d'attelage (14) est serrée du moins pratiquement dans la direction horizontale, surplombant en particulier la zone de serrage (25) et/ou en ce que des moyens de réglage (94) pour le réglage d'un espacement des pièces de serrage (20, 22) sont prévus dans la position de serrage (K).

11. Dispositif d'accouplement de porte-charge arrière selon la revendication 10, **caractérisé en ce que** les moyens de réglage (94) sont conçus pour un réglage d'une distance entre le premier et le deuxième axe de pivotement (68, 100) dans la position de serrage (K).

12. Dispositif d'accouplement de porte-charge arrière selon l'une quelconque des revendications précédentes, **caractérisé en ce que** la deuxième pièce de serrage (22) présente un support de col (104) en saillie en direction de la zone de serrage (25) et réalisé pour s'appliquer contre le col d'attelage (16) et/ou un support de rotule (102) en saillie en direction de la zone de serrage (25) et réalisé pour s'appliquer contre la face supérieure de la rotule d'attelage (14), qui s'appliquent lors de la mise en place du dispositif d'accouplement de porte-charge arrière (10) sur la rotule d'attelage (14) contre une surface de la rotule d'attelage (14) ou du col d'attelage (16) afin d'entraîner une orientation du dispositif d'accouplement de porte-charge arrière (10) par rapport au dispositif d'attelage de véhicule automobile (12) et/ou **en ce que** sont prévus exactement deux axes de pivotement (68, 100) pour l'accouplement de la première pièce de serrage (20) et de la deuxième pièce de serrage (22) au moyen de l'organe d'accouplement (70).

13. Dispositif d'accouplement de porte-charge arrière selon l'une quelconque des revendications précédentes, **caractérisé en ce qu'**un dispositif de verrouillage (85) permettant le verrouillage de l'organe d'accouplement (70), en particulier d'un levier d'actionnement (78) relié à l'organe d'accouplement (70) est réalisé dans la position de serrage (K).

14. Porte-charge arrière destiné à être appliqué au niveau d'un dispositif d'attelage de véhicule automobile (12), **caractérisé par** un dispositif d'accouplement de porte-charge arrière (10) selon l'une quelconque des revendications précédentes.
